# EUROPEAN PATENT APPLICATION

(11) **EP 4 621 541 A1**
(43) Date of publication of application: **24.09.2025**
(21) Application number: 23905460.4
(22) Date of filing: 30.10.2023
(51) Int. Cl.: G06F 3/04845

(54) **IMAGE TEXT SHARING METHOD, APPARATUS AND DEVICE, AND COMPUTER-READABLE STORAGE MEDIUM**

(30) Priority: 20.12.2022 CN 202211648846
(71) Applicant: GUANGDONG OPPO MOBILE TELECOMMUNICATIONS CORP., LTD., Dongguan, Guangdong 523860 (CN)
(72) Inventor: MA, Maofei, Dongguan, Guangdong 523860 (CN)
(74) Representative: Novagraaf Technologies
(86) International application number: PCT/CN2023/127911
(87) International publication number: WO 2024/131288

(57) **Abstract**

The present application provides an image text sharing method, apparatus and device, and a computer-readable storage medium, applied to a device provided with a display screen. The method comprises: presenting text recognition content on an image to be processed displayed on a first display interface, a text style of the text recognition content being consistent with a text style of text content of an original image; in response to a data selection instruction for the text recognition content, selecting target text content, the target text content representing text content of a paragraph level or a row level; and in response to a movement instruction for the target text content, sharing the target text content to a second display interface. According to the present application, the sharing capability of image text content can be improved, and the diversity of a device at the interactive level can be realized.

## Description

### CROSS REFERENCE TO RELATED APPLICATIONS

The present disclosure claims priority to the Chinese Patent Application No. 202211648846.7, filed on December 20, 2022, the contents of which are herein incorporated by reference in its entirety.

### TECHNICAL FIELD

The present disclosure relates to the field of image processing, in particular to an image text sharing method, an apparatus, a device, and a computer-readable storage medium.

### BACKGROUND

A terminal using the Android system (i.e., a mobile operating system) provides a user with an image text recognition function. The image text recognition function may perform text recognition on an image in a browsing interface, enabling the user to perform interactive operations on the recognized text content.

Currently, for the recognized text content, the user usually selects a target text content character by character by manually continuously sliding and then performs operations such as sharing on the selected target text content. As a result, the interaction method for sharing the target text content is relatively limited.

### SUMMARY

An image text sharing method, an apparatus, a device, and a computer-readable storage medium are provided to improve sharing capability of image text content, and achieve a diversity of a device at an interactive level.

The technical solutions in some embodiments of the present disclosure include following.

An image text sharing method performed by a device with a display screen is provided and includes: displaying a text recognition content in a to-be-processed image displayed in a first display interface, a text style of the text recognition content being the same as a text style of a text content of an original image; selecting a target text content in response to a data selection instruction for the text recognition content, the target text content representing a text content at a paragraph-level or a line-level; and sharing the target text content to a second display interface in response to a movement instruction for the target text content.

An image text sharing apparatus is provided and includes: a display component, configured to display a text recognition content in a to-be-processed image displayed in a first display interface, a text style of the text recognition content is the same as a text style of a text content of an original image; an extraction component, configured to select a target text content in response to a data selection instruction for the text recognition content, the target text content representing text content at a paragraph-level or a line-level; and a sharing component, configured to, share the target text content to a second display interface in response to a movement instruction for the target text content.

An image text sharing device is provided and includes a processor and a storage medium storing executable instructions for the processor. The storage medium depends on the processor to perform operations through a communication bus. The instructions, when executed by the processor, perform the above image text sharing method.

A computer-readable storage medium storing executable instructions is provided. When the executable instructions are executed by one or more processors, the one or more processors perform the above image text sharing method.

An image text sharing method, a device, and a computer-readable storage medium. The method is performed by a device with a display screen. On one hand, the text recognition content is displayed in the to-be-processed image displayed in the first display interface. Since the text recognition content may carry the text style information of text content of the original image, the text style of the text recognition content displayed at the interaction level is the same as the text style of text content of the original image.

On the other hand, in response to the data selection instruction for the text recognition content, the target text content is selected. The target text content represents paragraph-level or line-level text content. Since the text recognition content may carry the paragraph information and line text information of text content of the original image, interactive operations such as single-clicking to select paragraph text or line text may be achieved through paragraph information, allowing quick selection of paragraph-level or line-level text content at the interaction level. This achieves rapid extraction of useful information from the text recognition content, improvs the applicability of text recognition content in interactive scenarios, and enhancing the interactive diversity of image text content.

On the other hand, in response to the movement instruction for the target text content, the target text content is shared to the second display interface. The movement instruction for the target text content may move the target text content to the second display interface adjacent to the first display interface. When the target text content is shared in an across-screen manner, the target text content may carry paragraph information and text style information for cross-screen sharing, thereby improving the capability of sharing the image text content. This achieves multiple interactive methods for sharing the text recognition content, further enhancing the diversity of image text content at the interaction level.

### BRIEF DESCRIPTION OF THE DRAWINGS

The drawings are incorporated into and constitute a part of this specification, illustrate embodiments of the present disclosure. The drawings, together with the description, serve to explain the technical solutions of the present disclosure. It is obvious that the drawings in the following description are merely some embodiments of the present disclosure, and other drawings may be obtained by those of ordinary skill in the art without creative effort.

The flowcharts shown in the drawings are illustrative and do not necessarily include all content and operations/steps or must be performed in the described order. For example, some operations/steps may be decomposed, while others may be combined or partially combined, so the actual performing order may vary depending on the actual situation.
FIG. 1 is a first schematic flowchart of an optional image text sharing method according to some embodiments of the present disclosure.
FIG. 2a is a first displayed schematic diagram of an optional original image according to some embodiments of the present disclosure.
FIG. 2b is a second displayed schematic diagram of an optional original image according to some embodiments of the present disclosure.
FIG. 2c is a displayed schematic diagram of an optional to-be-processed image according to some embodiments of the present disclosure.
FIG. 3 is a second schematic flowchart of an optional image text sharing method according to some embodiments of the present disclosure.
FIG. 4 is a first displayed schematic diagram of an optional hyperlink text according to some embodiments of the present disclosure.
FIG. 5 is a second displayed schematic diagram of an optional hyperlink text according to some embodiments of the present disclosure.
FIG. 6 is a third schematic flowchart of an optional image text sharing method according to some embodiments of the present disclosure.
FIG. 7 is a first displayed schematic diagram of an optional target text content according to some embodiments of the present disclosure.
FIG. 8 is a first displayed schematic diagram of an optional sharing process of a target text content according to some embodiments of the present disclosure.
FIG. 9 is a second displayed schematic diagram of an optional sharing process of a target text content according to some embodiments of the present disclosure.
FIG. 10 is a third displayed schematic diagram of an optional sharing process of a target text content according to some embodiments of the present disclosure.
FIG. 11 is a third schematic flowchart of an optional image text sharing method according to some embodiments of the present disclosure.
FIG. 12 is a second displayed schematic diagram of an optional target text content according to some embodiments of the present disclosure.
FIG. 13 is a fourth schematic flowchart of an optional image text sharing method according to some embodiments of the present disclosure.
FIG. 14 is a third displayed schematic diagram of an optional target text content according to some embodiments of the present disclosure.
FIG. 15 is a fifth schematic flowchart of an optional image text sharing method according to some embodiments of the present disclosure.
FIG. 16 is a fourth displayed schematic diagram of an optional sharing process of a target text content according to some embodiments of the present disclosure.
FIG. 17 is a fifth displayed schematic diagram of an optional sharing process of a target text content according to some embodiments of the present disclosure.
FIG. 18 is a sixth displayed schematic diagram of an optional sharing process of a target text content according to some embodiments of the present disclosure.
FIG. 19 is a seventh displayed schematic diagram of an optional sharing process of a target text content according to some embodiments of the present disclosure.
FIG. 20 is an eighth displayed schematic diagram of an optional sharing process of a target text content according to some embodiments of the present disclosure.
FIG. 21 is a sixth schematic flowchart of an optional image text sharing method according to some embodiments of the present disclosure.
FIG. 22 is a seventh schematic flowchart of an optional image text sharing method according to some embodiments of the present disclosure.
FIG. 23 is an eighth schematic flowchart of an optional image text sharing method according to some embodiments of the present disclosure.
FIG. 24 is a ninth schematic flowchart of an optional image text sharing method according to some embodiments of the present disclosure.
FIG. 25 is a tenth schematic flowchart of an optional image text sharing method according to some embodiments of the present disclosure.
FIG. 26 is a structural schematic diagram of an optional image text sharing apparatus according to some embodiments of the present disclosure.
FIG. 27 is a structural schematic diagram of an optional image text sharing device according to some embodiments of the present disclosure.

### DETAILED DESCRIPTIONS

To make the objectives, technical solutions, and technical effects of the embodiments of the present disclosure clearer, the technical solutions of the present disclosure will be further described in detail below with reference to the accompanying drawings. The following embodiments are configured to illustrate the present disclosure but do not limit the scope of the present disclosure.

Unless otherwise defined, all technical and scientific terms used in the embodiments of the present disclosure have the same meanings as commonly understood by those skilled in the art. The terms used the embodiments of the present disclosure are for the purpose of describing the embodiments of the present disclosure and are not intended to limit the present disclosure.

The following description involves "some embodiments", "this embodiment", "embodiments of the present disclosure", and examples, which describe subsets of all possible embodiments. However, it should be understood that "some embodiments" may be the same or different subsets of all possible embodiments and may be combined without conflict.

If terms such as "first" and "second" appear in the embodiments of the present disclosure, the following explanation is added. in the following description, terms such as "first", "second", and "third" are used only to distinguish similar objects and do not imply a particular order. It should be understood that "first", "second", and "third" may be interchanged in order or sequence where permitted, so that the embodiments of the present disclosure described herein may implement in orders other than those illustrated or described.

Currently, when a device using the iOS system (iPhone Operating System) recognizes a text content of an image, the device typically performs operations S101 to S102.

The operation S101 may include: performing Optical Character Recognition (OCR) on an image, and obtaining related text content information including a text box, a text content, and orientation information.

The operation S102 may include: performing hyperlink recognition through the text content information, including but not limited to a phone number, an email, a network address, and an address, etc.

The operation S103 may include: creating a floating layer carrying a drawn content, the floating layer completely covering the image, performing data transformation based on scaling, rotation, etc., and drawing a highlighted text content and a hyperlink content;

The operation S104 may include: implementing a corresponding subsequent service by processing an interaction of the floating layer. The response logic of LiveText may include:
(1) single-clicking or long-pressing a hyperlink to display a corresponding pop-up window for actions such as making a phone call or performing a web search;
(2) single-clicking, or long-pressing and selecting an ordinary highlighted text in sliding manner to draw an effect similar to TextView selection. The selected range may be adjusted by a handle, and after selection, a system text toolbar pops up for actions such as copying, sharing, selecting all, searching, or translating;
(3) double-clicking an ordinary text to segment words and pop up the system text toolbar; and
(4) the floating layer supporting image scaling, rotation, etc.

However, due to differences in OCR capabilities and differences between iOS and Android systems, the TextView function of the iOS system has certain limitations in a product and performance, the limitations include:
(1) the OCR result lacks paragraph information, and a hyperlink across lines cannot be recognized or are only partially recognized. The recognized text style cannot be carried, making it impossible to quickly select paragraph text at the interaction level, which may only be achieved by sliding selection;
(2) At the interaction level, only text within connected regions may be selected, and multi-line text across lines cannot be selected;
(3) There is a lack of interconnectivity. LiveText does not support split-screen dragging or sharing image-format text to an interconnected device.

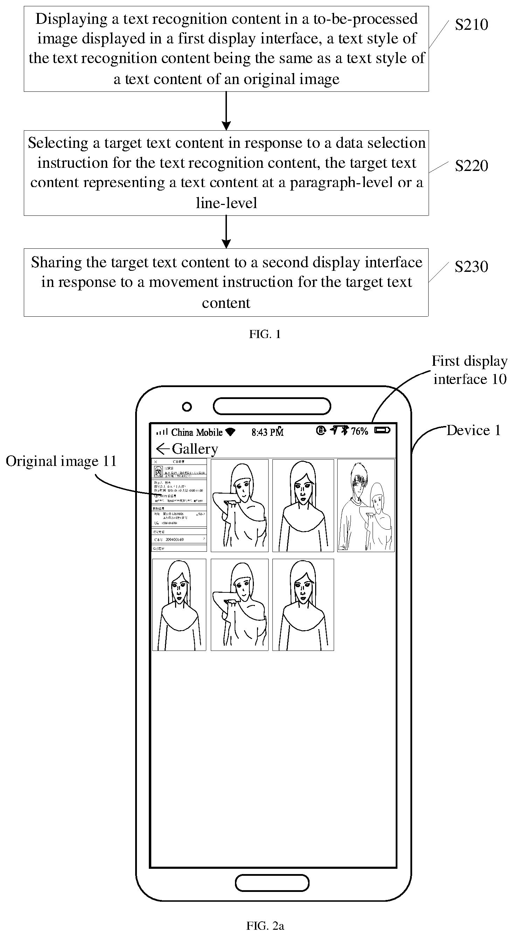

Based on this, some embodiments of the present disclosure provide an image text sharing method, performed by a device with a display screen. As shown in FIG. 1, the method may include operations S210 to S230.

The operation S210 may include: displaying a text recognition content in a to-be-processed image displayed in a first display interface, a text style of the text recognition content being the same as a text style of a text content of an original image.

In some embodiments, the first display interface of the image text sharing device displays an original image with text content, and the text content of the original image is recognized. A to-be-processed image is displayed in an image layer above the original image, the recognized text recognition content is displayed in the to-be-processed image. The text recognition content is covered on a position corresponding to the content of the original image, and the text style of the text recognition content is the same as that of the text style of the text content of the original image.

In some embodiments, a device with a display screen may display the original image in the first display interface. After the text content of the original image is performed text recognization, the to-be-processed image is displayed in a form of a floating layer above the original image, and the to-be-processed image displays the text recognition content.

In some embodiments, the to-be-processed image is covered on the position corresponding to the original image. The to-be-processed image may be displayed in a form of a floating layer above the original image.

In some embodiments of the present disclosure, the text recognition content is covered on the position corresponding to the content of the original image.

In some embodiments, the text recognition content is the text content obtained by recognizing the text content of the original image, and is displayed at the position corresponding to the text content of the original image.

In some embodiments, the text style of the text recognition content is the same as the text style of text content of the original image. In other words, the text recognition content displayed in the to-be-processed image may carry the text style information of the text content of the original image. The text style may include a color, a size, and a font of the text, etc.

In some embodiments, the text recognition content may carry paragraph information of text content of the original image, so that the text recognition content may include one or at least two paragraph texts.

In some embodiments, the first display interface is the display interface of the image text sharing device with a display screen. The device may be a mobile phone, a tablet, or a laptop, etc., which is not limited and may be selected based on actual application scenarios.

In some embodiments, for an image text sharing device with a display screen, the original image is displayed in the first display interface. In response to a text recognition instruction for the original image, the text content of the original image is recognized to obtain the text recognition content. Based on the text recognition content, the to-be-processed image is displayed, and the to-be-processed image is covered on the position corresponding to the original image.

In some embodiments, for the text recognition content displayed in the first display interface, in response to a text recognition instruction for the original image, the image text sharing device recognizes the text content of the original image to obtain the text recognition content. After the image text sharing device recognizes the text content of the original image, the to-be-processed image is displayed above the original image, and the text recognition content is displayed in the to-be-processed image. The to-be-processed image may be covered on the original image in a form of a floating layer.

In some embodiments, when the to-be-processed image is covered on the original image in a form of a floating layer, an image layer may be covered on the original image, and the image layer is the to-be-processed image.

In some embodiments, the text recognition instruction may be clicking, double-clicking, long-pressing, preset gesture, or other interactive method, which is not limited and may be selected based on actual application scenarios.

In some embodiments, the original image may be of any type of image, such as a JPG image, a PNG image, or an emoji image. In addition, the text content carried in the original image is not limited and may include a table, a text, or an image, etc. Further, the source of the original image is not limited and may be a screenshot, a chat session, or a photograph, etc.

In some embodiments, the original image may be an image currently being captured by a camera. When the image text sharing device recognizes that the image being captured includes a text content, the image text sharing device automatically recognizes the text content in the image captured by the camera. For example, when the image text sharing device recognizes that the image being captured includes the text content, the image text sharing device pauses the capture action of the camera and displays the captured image with the text content. At this time, a text recognition control may be displayed in the interface of the device. In response to the triggering operation on the text recognition control, the image text sharing device performs text recognition on the image captured by the camera to obtain the text recognition content.

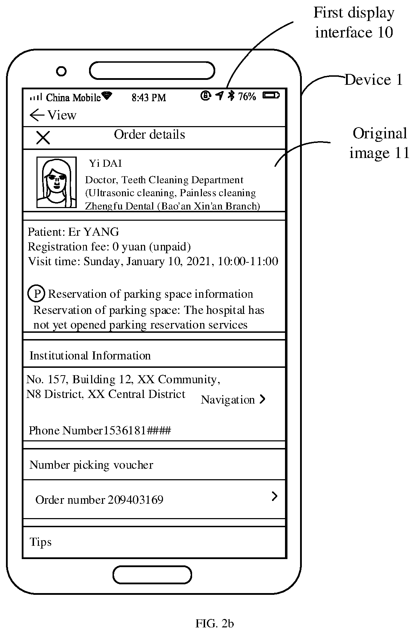

For example, the original image may be an image captured by the camera of the image text sharing device. FIG. 2a is a first displayed schematic diagram of an optional original image according to some embodiments of the present disclosure. As shown in FIG. 2a, a "gallery" interface is displayed in a first display interface 10 of the device (device 1), and an original image 11 captured by the camera is saved in the gallery. FIG. 2b is a second displayed schematic diagram of an optional original image according to some embodiments of the present disclosure. As shown in FIG. 2b, an original image 11 is displayed in the "gallery" interface displayed in a first display interface 10 of the device (device 1), the original image 11 is displayed in a full screen in the first display interface 10.

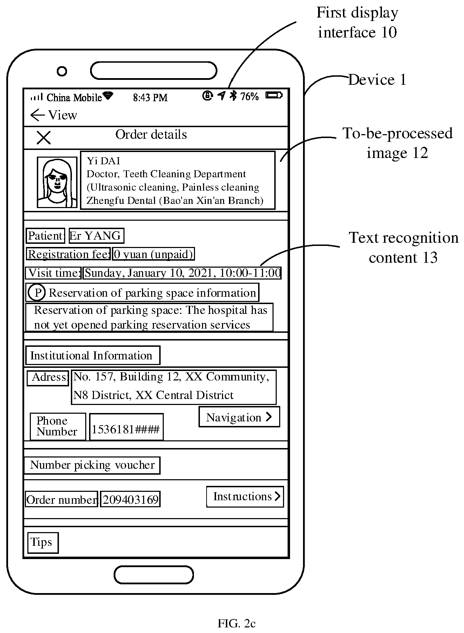

For example, FIG. 2c is a displayed schematic diagram of an optional to-be-processed image according to some embodiments of the present disclosure. As shown in FIG. 2c, a text recognition content 13 is displayed in the to-be-processed image 12 displayed in the first display interface 10 of the device (Device 1). It may be seen that the to-be-processed image is displayed in a form of a floating layer above the original image, and the text recognition content is covered on the position corresponding to the content of the original image.

In some embodiments, the text recognition content is displayed in the to-be-processed image displayed in the first display interface and is covered on the position corresponding to the content of the original image. Since the text recognition content may carry the text style information of text content of the original image, at the interaction level, the text style of the text recognition content is the same as the text style of text content of the original image.

The operation S220 may include: selecting a target text content in response to a data selection instruction for the text recognition content, the target text content representing a text content at a paragraph-level or a line-level.

In some embodiments, after receiving the data selection instruction for the text recognition content, the image text sharing device enables the text content at a paragraph-level or a line-level to be in a selected state at the triggered region.

In some embodiments, the target text content represents the text content at a paragraph-level or a line-level. The text content at a paragraph-level refers to the selected text content displayed in a paragraph form. It should be understood that one paragraph serves as a unit of the selected text content. The text content at a line-level refers to selected text content displayed in a line form. It should be understood that one line serves as a unit of the selected text content.

In some embodiments, the data selection instruction is configured to select the text recognition content to obtain the selected target text content.

In some embodiments, the data selection instruction may include first data trigger instructions corresponding to a hyperlink type. The first data trigger instructions are configured to select text recognition content of at least one paragraph text or text recognition content of at least one line of continuous text content.

In some embodiments, the first data trigger instructions are data trigger instructions for text recognition content corresponding to a hyperlink type.

In some embodiments, the data selection instruction may be single-clicking, double-clicking, long-pressing, a preset gesture, or other interactive method.

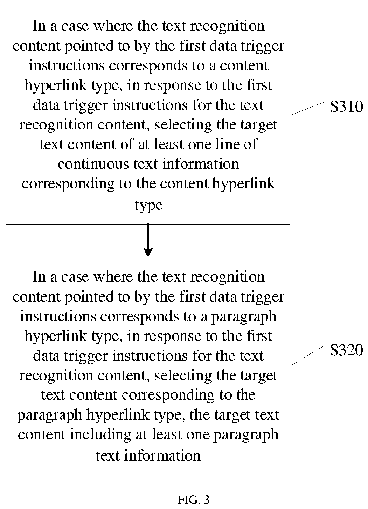

In some embodiments of the present disclosure, as shown in FIG. 3, the operation S220 may include operations S310 to S320.

The operation S310 may include: in a case where the text recognition content pointed to by the first data trigger instructions corresponds to a content hyperlink type, in response to the first data trigger instructions for the text recognition content, selecting the target text content of at least one line of continuous text information corresponding to the content hyperlink type.

In some embodiments, in response to the first data trigger instruction, the image text sharing device judges the hyperlink type corresponding to the text recognition content pointed to by the first data trigger instructions. When the text recognition content pointed to by the first data trigger instructions corresponds to a content hyperlink type, the image text sharing device enables the target text content of at least one line of continuous text information corresponding to the content hyperlink type in the region triggered by the first data trigger instructions to be in a selected state. In some embodiments, the content hyperlink type (also called hyperlink type) may be a phone number, an email, a network address, or an address, etc., which is not limited and may be selected based on actual application scenarios. In some embodiments, the text recognition content may carry hyperlink information of the text content of the original image. The hyperlink information may include the identifier of the starting character of each hyperlink text, the hyperlink type corresponding to the hyperlink text, and the hyperlink text. Since the text recognition content may carry the hyperlink information of the content of the original image, when a user triggers a hyperlink in the text recognition content, the corresponding hyperlink text in the triggered region is selected. It should be noted that the hyperlink text may be text content located on the same line or different lines.

In some embodiments, the first data trigger instructions may be single-clicking, double-clicking, long-pressing, a preset gesture, or other interactive method.

In some embodiments, different operations correspond to different instructions in the image text sharing device.

In some embodiments, in response to the first data trigger instruction for the text recognition content, the image text sharing device may display a hyperlink toolbar corresponding to the selected hyperlink type in the first display interface. Based on the triggering on the hyperlink toolbar, the image text sharing device performs the operation indicated by the toolbar on the selected hyperlink.

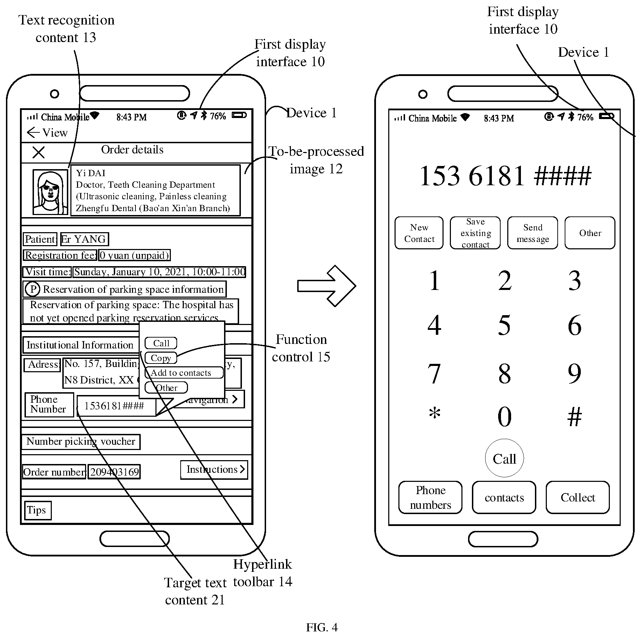

For example, FIG. 4 is a first displayed schematic diagram of an optional hyperlink text according to some embodiments of the present disclosure. As shown in FIG. 4, in the display screen of Device 1, the user may click the phone hyperlink "1536181####", i.e., the target text content 21, in the text recognition content 13 displayed in the to-be-processed image 12 in the first display interface 10. It may be seen that the selected hyperlink "1536181####" is hyperlink text on the same line. In response to the triggering operation on the hyperlink "1536181####", the hyperlink toolbar 14 corresponding to the phone hyperlink is displayed in the first display interface. As shown in FIG. 4, the hyperlink toolbar may have multiple function controls 15 (e.g., "Call", "Copy", and "Add to Contacts", etc.). The user may click the "Call" control in the toolbar, and in response to the triggering operation on the "Call" control, , the image viewing interface in the first display interface is switched to the phone interface for call.

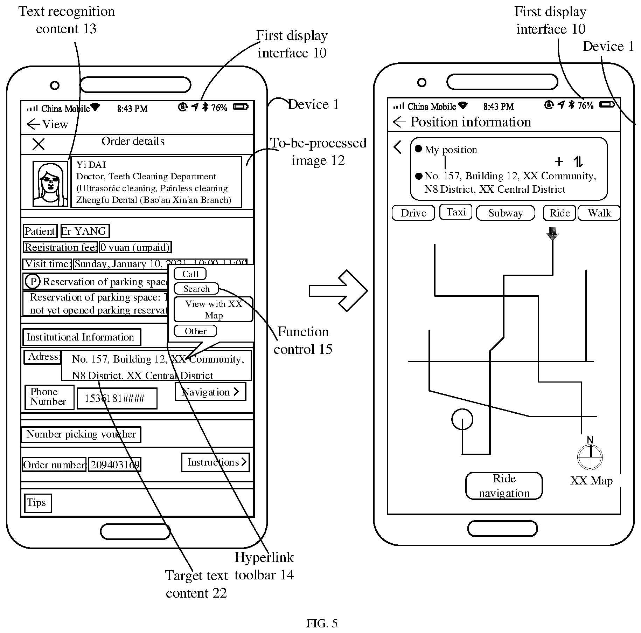

For example, FIG. 5 is a second displayed schematic diagram of an optional hyperlink text according to some embodiments of the present disclosure. As shown in FIG. 5, in the display screen of Device 1, the user may click the address hyperlink "No. 157, Building 12, XX Community, N8 District, XX Central District", i.e., the target text content 22, in the text recognition content 13 displayed in the to-be-processed image 12 in the first display interface 10. It may be seen that the selected hyperlink "No. 157, Building 12, XX Community, N8 District, XX Central District" are hyperlink text across two lines. In response to the triggering operation on the hyperlink "No. 157, Building 12, XX Community, N8 District, XX Central District", the hyperlink toolbar 14 corresponding to the phone hyperlink is displayed in the first display interface. As shown in FIG. 5, the hyperlink toolbar may have multiple function controls 15 (e.g., "Copy", "Search", and "View with XX Map", etc.). The user may click the "View with XX Map" control in the hyperlink toolbar, and in response to the triggering on the "View with XX Map" control, the image viewing interface in the first display interface is switched to the XX Map interface for navigation to the address "No. 157, Building 12, XX Community, N8 District, XX Central District."

The operation S320 may include: in a case where the text recognition content pointed to by the first data trigger instructions corresponds to a paragraph hyperlink type, in response to the first data trigger instructions for the text recognition content, selecting the target text content corresponding to the paragraph hyperlink type, the target text content including at least one paragraph text information.

In some embodiments, in response to the first data trigger instructions, the image text sharing device judges the hyperlink type corresponding to the text recognition content pointed to by the first data trigger instructions. When the text recognition content pointed to by the first data trigger instructions correspond to a paragraph hyperlink type, the image text sharing device enables the target text content including at least one paragraph text information corresponding to the paragraph hyperlink type in the region triggered by the first data trigger instructions to be selected state.

In some embodiments, in a case where the text recognition content in the region triggered by the user corresponds to a paragraph hyperlink type, in response to the data selection instruction for the text recognition content, the target text content including at least one paragraph text is selected. That is, in response to the data selection instruction for the text recognition content paragraph text in the triggered region is selected.

In some embodiments, the paragraph hyperlink type may be a preset hyperlink type, such as a phone number, an email, a network address, and an address, etc., which is a hyperlink corresponding to a text content, or may be a non-preset hyperlink type corresponding to a text content.

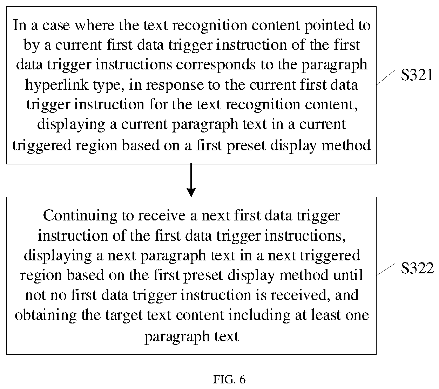

In some embodiments of the present disclosure, as shown in FIG. 6, the operation S320 may include operations S321 to S322.

The operation S321 may include: in a case where the text recognition content pointed to by a current first data trigger instruction of the first data trigger instructions corresponds to the paragraph hyperlink type, in response to the current first data trigger instruction for the text recognition content, displaying a current paragraph text in a current triggered region based on a first preset display method.

In some embodiments, in a case where the text recognition content pointed to by the first data trigger instructions corresponds to a paragraph hyperlink type, in response to the first data trigger instructions for the text recognition content, the image text sharing device displays the current paragraph text pointed to by the user in the to-be-processed image based on the first preset display method.

In some embodiments, the first data trigger instruction may be clicking, double-clicking, long-pressing, or other interactive method, which is not limited and may be selected based on actual application scenarios.

In some embodiments, the first preset display method is predefined. For example, a selected paragraph text may be displayed in the to-be-processed image through highlighting the text, bolding the font, or highlighting the text background, etc., which is not limited and may be selected based on actual application scenarios.

The operation S322 may include: continuing to receive a next first data trigger instruction of the first data trigger instructions, displaying a next paragraph text in a next triggered region based on the first preset display method until not no first data trigger instruction is received, and obtaining the target text content including at least one paragraph text.

In some embodiments, after receiving one first data trigger instruction, the image text sharing device continues to receive the next first data trigger instruction and displays the next paragraph text in the next triggered region in the to-be-processed image based on the first preset display method until no first data trigger instruction is received, thereby obtaining the target text content including at least one paragraph text. In other words, the user may continuously select paragraph texts in the text recognition content, and the selected target text content may include at least one paragraph text.

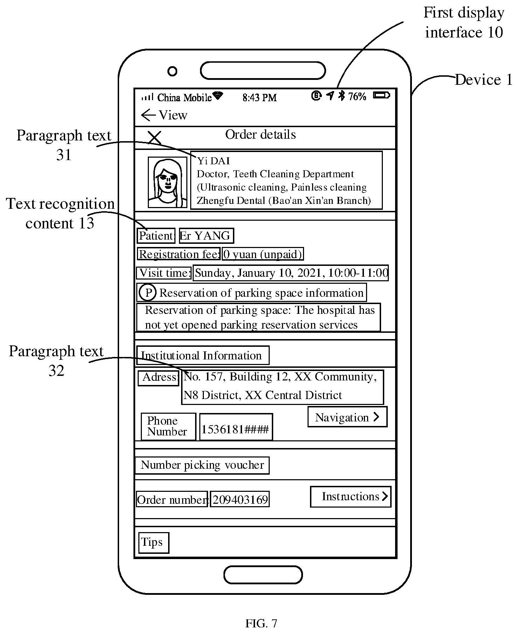

For example, FIG. 7 is a first displayed schematic diagram of an optional target text content according to some embodiments of the present disclosure. As shown in FIG. 7, in the display screen of Device 1, for the text recognition content 13 displayed in the first display interface 10, the user clicks the region where the text content "Doctor, Teeth Cleaning Department..." is located, and the paragraph text 31 where the text content "Doctor, Teeth Cleaning Department..." is located is displayed with a highlighted text background. The user then clicks the region where the text content "N8 District, XX Central District ..." is located, and the paragraph text 32 where the text content "N8 District, XX Central District ..." is located is displayed with a highlighted text background. This continues until no click operation by the user on the text content region is received, the target text content including two paragraph texts (paragraph text 31 and paragraph text 32) is obtained.

In some embodiments, the image sharing device adds paragraph capability to an image text. In terms of interaction, the image sharing device not only supports single-clicking for word segmentation in the traditional TextView interaction method but also supports paragraph selection in particular scenarios. For example, a paragraph text may be selected by single-clicking the text content. Since the text recognition content may carry the paragraph information of text content of the original image, interactive operations such as single-clicking to select a paragraph may be achieved through the paragraph information, allowing the user to quickly select paragraph text at the interaction level and to select multiple text contents at a paragraph-level, so that the user may quickly extract useful information from the text recognition content. This achieves multiple interactive methods for sharing text recognition content, thereby enhancing the diversity of the image sharing device at the interaction level.

The operation S230 may include: sharing the target text content to a second display interface in response to a movement instruction for the target text content.

In some embodiments, after receiving a movement instruction for the target text content in the to-be-processed image, the image text sharing device shares the selected target text content in the first display interface to the second display interface.

In some embodiments, the first display interface and the second display interface may belong to the same image text sharing device or to different image text sharing devices with the same identity information.

In some embodiments of the present disclosure, the second display interface and the first display interface are displayed in different regions of the same device.

In some embodiments, when the image text sharing device is in a split-screen mode, the second display interface and the first display interface are displayed in different regions of the same device.

In some embodiments of the present disclosure, the first display interface is displayed in a first device, and the second display interface is displayed in a second device.

In some embodiments, the first display interface and the second display interface may be displayed in different devices. The first display interface is displayed in the first image text sharing device, and the second display interface is displayed in the second image text sharing device.

In some embodiments of the present disclosure, the operating systems of the first device and the second device are different.

In some embodiments, the first device and the second device may use the same platform, enabling cross-device text sharing.

In some embodiments, the systems of the first device and the second device may use different platforms, achieving text sharing across-platform and across-device. For example, the first device using the Android system may share text content to the second device using the iOS system, the first device using the HarmonyOS system may share text content to the second device using the ColorOS system, and the first device using the ColorOS system may share text content to the second device using the Robot Operating System (ROS), which is not limited and may be selected based on actual application scenarios.

In some embodiments, when the image text sharing device is in a split-screen mode, the first display interface and the second display interface may be displayed simultaneously in the display screen of the same device. When one image text sharing device and another image text sharing device are in a system interconnection mode, the first display interface and the second display interface are displayed in the display screens of the two different image text sharing devices. It should be noted that when one image text sharing device and another image text sharing device are in the system interconnection mode, accounts with the same identity information may respectively log in the two image text sharing devices to ensure system interconnection of the two image text sharing devices, thereby achieving text content sharing.

In some embodiments, first, interactive operations such as single-clicking to select a paragraph text or a line text may be achieved through the paragraph information, allowing quick selection of paragraph-level or line-level text content at the interaction level. This achieves rapid extraction of useful information from the text recognition content, improving the applicability of image text recognition content in various interactive scenarios and enhancing the diversity of image text content in interaction. Second, the movement instruction for the target text content may move the target text content to the second display interface adjacent to the first display interface. When the target text content is shared in an across-screen manner, the target text content may carry paragraph information and text style information for cross-screen sharing, thereby improving the capability of sharing the image text content. This achieves multiple interactive methods for sharing the text recognition content, further enhancing the diversity of image text content at the interaction level.

In some embodiments, in response to the data selection instruction for the text recognition content, the image text sharing device selects the target text content. The target text content represents the text content at a paragraph-level or a line-level. Since the text recognition content may carry the paragraph information and line text information of text content of the original image, interactive operations such as single-clicking to select a paragraph text or a line text may be achieved through paragraph information, allowing quick selection of paragraph-level or line-level text content at the interaction level. This achieves rapid extraction of useful information from the text recognition content, improving the efficiency and accuracy of selecting image text content. The user does not need to reset the text style information for the recognized text content, reducing unnecessary operations and facilitating subsequent operations of the user on the recognized text content, thereby improving the efficiency and accuracy of selecting text content.

In some embodiments of the present disclosure, in response to the movement instruction for the target text content, the target text content is moved to the second display interface adjacent to the first display interface and stops being moved, the target text content is shared to the second display interface.

In some embodiments, the image text sharing device receives the movement instruction for the target text content, and the movement instruction is a continuous instruction. In other words, starting from the moment the movement instruction for the target text content is received, the image text sharing device moves the target text content based on the received movement instruction until the movement instruction is no longer received, and then shares the target text content to the final second display interface, achieving the sharing of the target text content to the second display interface.

In some embodiments, the movement instruction may be a continuous instruction configured to move the target text content to the second display interface.

In some embodiments, the user may move the target text content to the second display interface through touching or dragging with a finger, a preset gesture, or touching with a knuckle, which is not limited and may be selected based on actual application scenarios.

In some embodiments, the target text content may carry the text information, the text style information, and the text style information of the content of the original image. Thus, the text style of the target text content displayed in the second display interface is the same as the text style of text content of the original image.

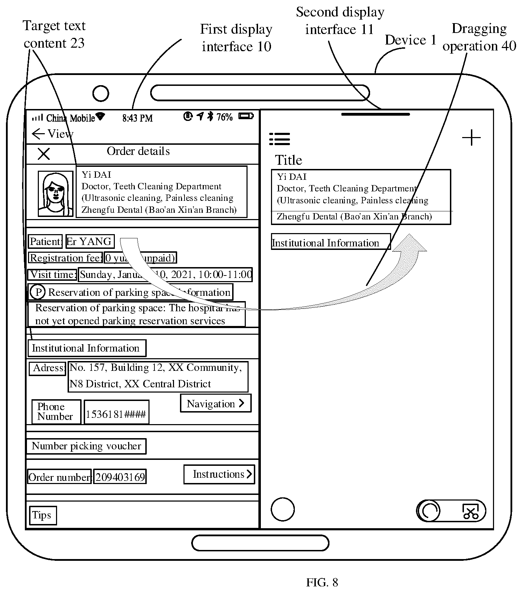

For example, FIG. 8 is a first displayed schematic diagram of an optional sharing process of a target text content according to some embodiments of the present disclosure. As shown in FIG. 8, Device 1 is in a split-screen mode, and the first display interface 10 and the second display interface 11 are displayed in the display screen of Device 1. On the first display interface 10, the selected target text content 23 is moved through dragging operation 40 to the second display interface 11 adjacent to the first display interface and stops being moved, and the target text content 23 is shared to the second display interface 11.

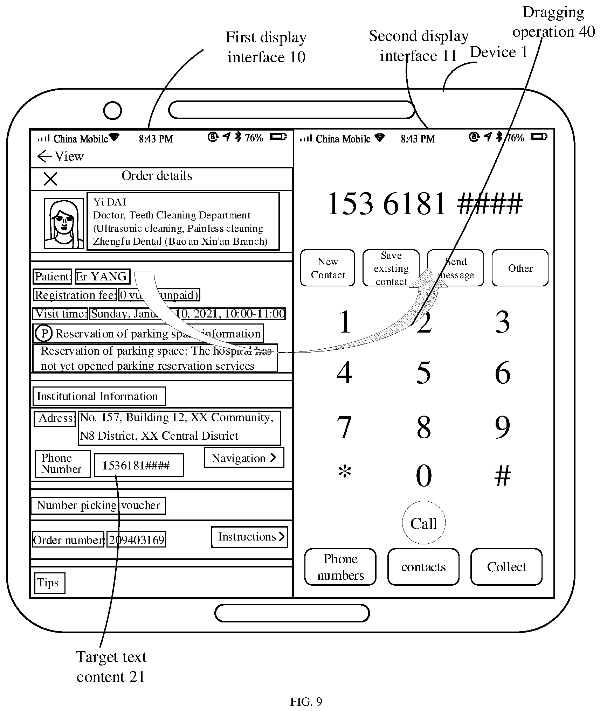

For example, FIG. 9 is a second displayed schematic diagram of an optional sharing process of a target text content according to some embodiments of the present disclosure. As shown in FIG. 9, in the first display interface 10, the user may touch the selected phone number text "1536181####", i.e., the target text content 21, with a finger and move the selected phone number text "1536181####" through dragging operation 40 to the second display interface 11, allowing the second display interface 11 to receive the target text content 21 for subsequent operations such as making a phone call.

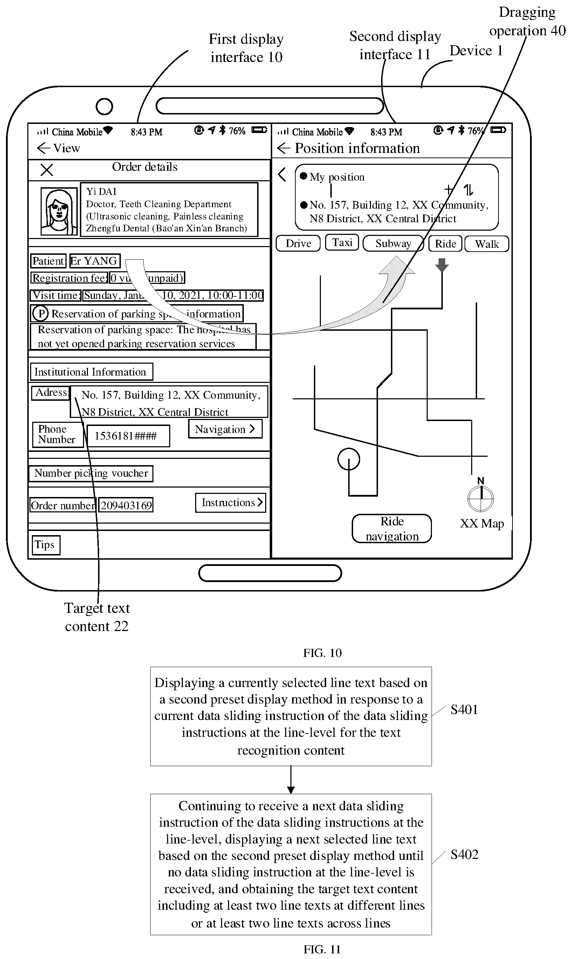

For example, FIG. 10 is a third displayed schematic diagram of an optional sharing process of a target text content according to some embodiments of the present disclosure. As shown in FIG. 10, in the first display interface 10, the user may touch the selected address "XX Central District N8 District XX Building 12, Unit 157", i.e., the target text content 22, with a finger and move the selected address "XX Central District N8 District XX Building 12, Unit 157" through dragging operation 40 to the second display interface 11, allowing the second display interface 11 to receive the target text content 22 for subsequent operations such as navigation.

In some embodiments, on one hand, the text recognition content is displayed in the to-be-processed image displayed in the first display interface. Since the text recognition content may carry the text style information of text content of the original image, the text style of the text recognition content displayed at the interaction level is the same as the text style of text content of the original image. On the other hand, through the movement instruction for the target text content, the target text content may be moved to the second display interface adjacent to the first display interface. When the target text content is shared across screens, the target text content may carry paragraph information and text style information for cross-screen sharing, thereby improving the capability to share image text content. This enables quick selection of paragraph text content or line text content at the interaction level and rapid extraction of useful information from the text recognition content, improving the applicability of text recognition content of image in various interactive scenarios and enhancing the interactive diversity of the image text content. Furthermore, since cross-screen dragging of the target text content may be achieved, the user experience of extracting useful information from images is effectively improved, facilitating cross-screen sharing of image text content for the user, enhancing the efficiency of text content sharing in the cross-screen mode, and improving the interactive diversity of the image text sharing device.

In some embodiments of the present disclosure, the data selection instruction may include data sliding instructions at a line-level, which is configured to select at least one line of text in the text recognition content.

In some embodiments of the present disclosure, the data sliding instructions at a line-level is a data selection instruction for the text recognition content at a line-level.

In some embodiments of the present disclosure, as shown in FIG. 11, the operation S220 may include operations S401 to S402.

The operation S401 may include: displaying a currently selected line text based on a second preset display method in response to a current data sliding instruction of the data sliding instructions at the line-level for the text recognition content.

In some embodiments, after receiving the data sliding instructions at a line-level for the text recognition content, the image text sharing device displays the currently selected line text pointed to by the user in the to-be-processed image based on the second preset display method.

In some embodiments, the current line text refers to the text content with a line as the unit.

In some embodiments, the data sliding instructions may include single-clicking, double-clicking, long-pressing, sliding, or other interactive method, which is not limited and may be selected based on actual application scenarios.

In some embodiments, the second preset display method is preset. For example, the selected line text may be displayed in the to-be-processed image through highlighting the text, bolding the font, or highlighting the text background, etc., which is not limited and may be selected based on actual application scenarios.

The operation S402 may include: continuing to receive a next data sliding instruction of the data sliding instructions at the line-level, displaying a next selected line text based on the second preset display method until no data sliding instruction at the line-level is received, and obtaining the target text content including at least two line texts at different lines or at least two line texts across lines.

In some embodiments, the image text sharing device continues to receive the next data sliding instruction at a line-level and displays the next selected line text in the triggered region in the to-be-processed image based on the second preset display method until no data sliding instruction at a line-level is received, and the target text content including at least one line text is obtained. In other words, the user may continuously select line texts in the text recognition content, and the selected target text content may include at least one line text.

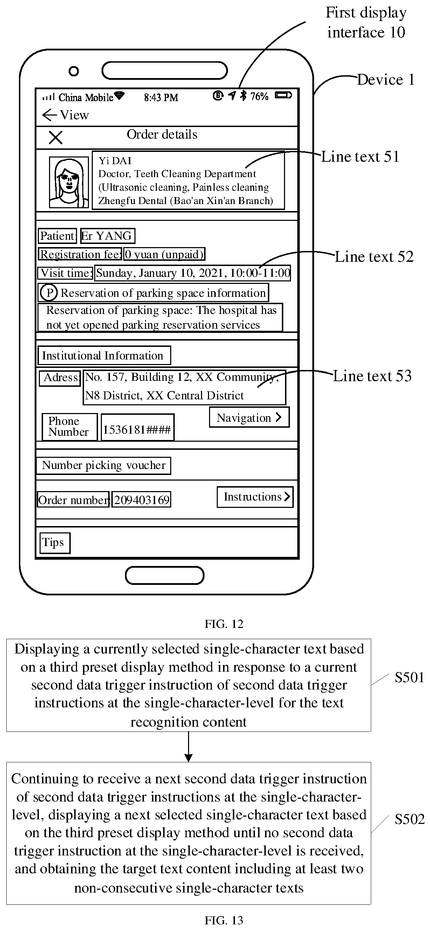

For example, FIG. 12 is a second displayed schematic diagram of an optional target text content according to some embodiments of the present disclosure. As shown in FIG. 12, in the first display interface 10 of Device 1, the user selects the text content "Teeth Cleaning Department (Ultrasonic Cleaning...", i.e., line text 51, by manually sliding or clicking, and after clicking, the line text 51 is displayed with a highlighted text background. The user then selects the text content "January 10, 2021...", i.e., line text 52, by manually sliding or clicking, and the line text 52 is displayed with a highlighted text background. The user then selects the text content "XX Central District...", i.e., line text 53, by manually sliding or clicking, and the line text 53 is displayed with a highlighted the text background. This continues until no manually sliding or clicking operation performed by the user on the text content region is received, the target text content including the line text 51, the line text 52, and the line text 53 are obtained.

In some embodiments, on one hand, the image text sharing device adds the capability to select text across lines in the image. In terms of interaction, line text selection in particular scenarios is supported, for example, line text may be selected by single-clicking, double-clicking, or sliding selection. Since the operations on the line text, the user may quickly select the target text content, effectively improving the interactive capability of the text sharing device for image text. On the other hand, the user selecting multiple lines of text across lines is supported, allowing the user to exclude useless image text content and quickly collect useful information from image text content, thereby improving the efficiency and accuracy of selecting text content.

In some embodiments of the present disclosure, the data selection instruction may include second data trigger instructions at a single-character-level, which is configured to select at least one single-character text in the text recognition content.

In some embodiments of the present disclosure, the second data trigger instructions are data trigger instructions for the text recognition content at a single-character-level.

In some embodiments of the present disclosure, as shown in FIG. 13, the operation S220 may include operations S501 to S502.

The operation S501 may include: displaying a currently selected single-character text based on a third preset display method in response to a current second data trigger instruction of second data trigger instructions at the single-character-level for the text recognition content.

In some embodiments, after receiving the second data trigger instructions at a single-character-level for the text recognition content, the image text sharing device displays the selected single-character text in the to-be-processed image based on the third preset display method.

In some embodiments, the single-character text refers to a single character. In other words, each time receiving a second data trigger instruction, the image text sharing device enables one single character in the region triggered by the second data trigger instruction to be a selected state.

In some embodiments, the data sliding instruction may include single-clicking, double-clicking, long-pressing, sliding, or other interactive method, which is not limited and may be selected based on actual application scenarios.

In some embodiments, the third preset display method is preset. For example, the selected single-character text may be displayed in the to-be-processed image through highlighting the text, bolding the font, or highlighting the text background, etc., which is not limited and may be selected based on actual application scenarios.

The operation S502 may include: continuing to receive a next second data trigger instruction of second data trigger instructions at the single-character-level, displaying a next selected single-character text based on the third preset display method until no second data trigger instruction at the single-character-level is received, and obtaining the target text content including at least two non-consecutive single-character texts.

In some embodiments, after receiving a second data trigger instruction at a single-character-level, the image text sharing device continues to receive the next second data trigger instruction at a single-character-level and displays the next selected single-character text in the in the triggered region in the to-be-processed image based on the third preset display method until no second data trigger instruction at a single-character-level is received, the target text content including at least one single-character text is obtained. In other words, the user may continuously select single-character texts in the text recognition content, and the selected target text content may include at least one single-character text.

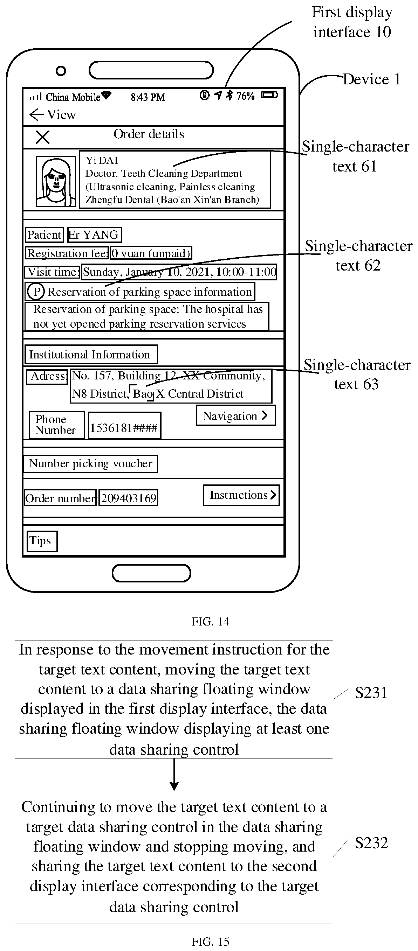

For example, FIG. 14 is a third displayed schematic diagram of an optional target text content according to some embodiments of the present disclosure. As shown in FIG. 14, in the first display interface 10 of Device 1, the user selects the single-character text "Cleaning", i.e., single-character text 61, by manually sliding or clicking, and the single-character text 61 is displayed with a highlighted the text background. The user then clicks the region where the text content "reservation" is located, i.e., single-character text 62, and the single-character text 62 is displayed with a highlighted text background. The user then clicks the region where the text content "Bao" is located, i.e., single-character text 63, and the single-character text 63 is displayed with a highlighted text background. This continues until no sliding or clicking operation performed by the user on the text content region is received, the target text content including the single-character text 61, the single-character text 62, and the single-character text 63 is obtained.

In some embodiments of the present disclosure, as shown in FIG. 15, the operation S230 may include operations S231 to S232.

The operation S231 may include: in response to the movement instruction for the target text content, moving the target text content to a data sharing floating window displayed in the first display interface, the data sharing floating window displaying at least one data sharing control.

In some embodiments, after receiving the movement instruction for the target text content in the first display interface, the image text sharing device moves the target text content to the data sharing floating window displayed in the first display interface in response to the movement instruction.

In some embodiments, the data sharing floating window may be displayed in the first display interface in a form of a thumbnail window. First, the user may drag the target text content to the data sharing floating window in a thumbnail form. Then, in response to a triggering operation, the data sharing floating window in a thumbnail form expands on the first display interface. In some embodiments, the data sharing floating window may be displayed in the first display interface by triggering a control inside the display screen of the image text sharing device or a key (e.g., the Home button, volume button, etc.) outside the display screen of the image text sharing device.

In some embodiments, for the target text content in the first display interface, when the user sends non-contact operation information, e.g., a gesture, the device receives the non-contact operation information. The device has preset operation information for data sharing in the first display interface. The non-contact operation information is compared with the preset operation information. When the two information are the same, the target text content is moved to the second display interface; otherwise, the first display interface does not respond to the non-contact operation information.

In some embodiments, the data sharing floating window displays at least one data sharing control. After the data sharing floating window in a thumbnail form expands, the data sharing floating window displays at least one data sharing control, such as "Phone", "XX Map", "Text message", and "Note", etc. Each data sharing control is an installed application (APP) on the device.

The operation S232 may include: continuing to move the target text content to a target data sharing control in the data sharing floating window and stopping moving, and sharing the target text content to the second display interface corresponding to the target data sharing control.

In some embodiments, in the expanded data sharing floating window, the user continues to move the target text content to the target data sharing control and stops moving, and shares the target text content to the second display interface corresponding to the target data sharing control.

In some embodiments, the target text content received by the second display interface may carry the text information, paragraph information, and style information of the content of the original image. Thus, the target text content displayed in the second display interface has the same paragraph format and text style as the content of the original image.

In some embodiments, in the expanded data sharing floating window, the user may click the target data sharing control of the data sharing floating window to share the target text content to the second display interface corresponding to the target data sharing control.

In some embodiments, each data sharing control represents an installed application on the device. When the user selects the target data sharing control, the target data sharing control responds to the triggering operation, the first display interface is switched to the second display interface corresponding to the target data sharing control. It should be understood that, each data sharing control may correspond to a default display interface to share the target text content to the default display interface corresponding to the data sharing control.

In some embodiments, the first display interface and the second display interface may belong to the same image text sharing device or to different image text sharing devices with the same identity information. In other words, when the image text sharing device is in a split-screen mode, the first display interface and the second display interface may be displayed simultaneously in the display screen of the same device. When one image text sharing device and another image text sharing device are in a system interconnection mode, the first display interface and the second display interface are displayed in the display screens of the two different image text sharing devices. It should be noted that when one image text sharing device and another image text sharing device are in the system interconnection mode, accounts with the same identity information may respectively log in the two image text sharing devices to ensure system interconnection of the two image text sharing devices.

In some embodiments, when the device is interconnected to at least one other device, the data sharing floating window may display the interconnected device. In other words, the data sharing floating window may display data sharing controls of other devices.

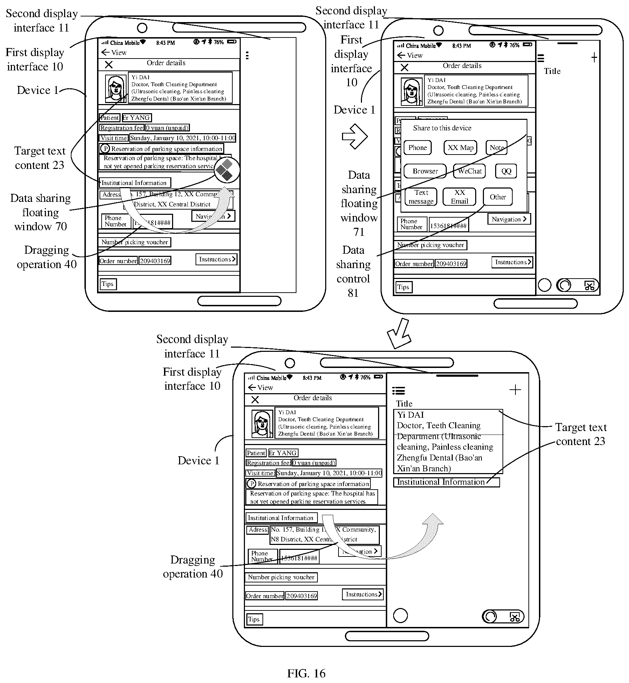

For example, FIG. 16 is a fourth displayed schematic diagram of an optional sharing process of a target text content according to some embodiments of the present disclosure. As shown in FIG. 16, when the device (Device 1) is in the split-screen mode, the first display interface 10 and the second display interface 11 are displayed in display screen of Device 1. First, the user selects the target text content 23 in the text recognition content of the to-be-processed image in the first display interface 10. Then, after selecting the last text content, the user moves the target text content 23 through dragging operation 40 to the data sharing floating window 70 in a thumbnail form. The data sharing floating window 70 in a thumbnail form responds to the triggering operation and expands on the first display interface 10. As shown, the expanded data sharing floating window 71 may include at least one data sharing control 81. Further, the user then moves to the target data sharing control ("Notes") and stay for a preset duration. Further, in response to the triggering on the target data sharing control ("Notes"), the application interface corresponding to the target data sharing control ("Notes") is displayed in the second display interface 11 of Device 1. The data sharing floating window 71 then returns to the thumbnail form. Finally, the user moves the target text content 23 through dragging operation 40 to the second display interface. It should be noted that, the user may click the target data sharing control ("Notes") in the expanded data sharing controls to trigger the target data sharing control ("Notes").

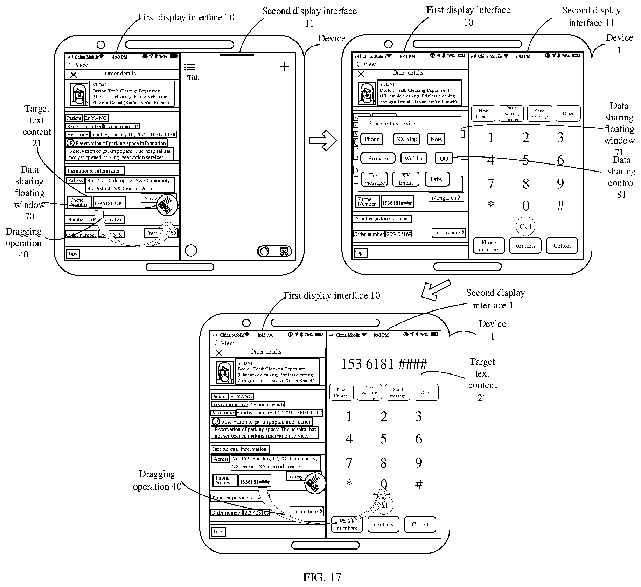

For example, FIG. 17 is a fifth displayed schematic diagram of an optional sharing process of a target text content according to some embodiments of the present disclosure. As shown in FIG. 17, first, the user selects the target text content ("1536181####"), i.e., the target text content 21, which is a phone number-type hyperlink (hyperlink text), in the text recognition content of the to-be-processed image in the first display interface. The user then moves the target text content 21 through dragging operation 40 to the data sharing floating window 70 in a thumbnail form. The thumbnail data sharing floating window 70 responds to the triggering operation, and the expanded the data sharing floating window 71 is displayed in the first display interface 10. The user then moves to the target data sharing control ("Phone") and stays for a preset duration. In response to the triggering on the target data sharing control ("Phone"), the second display interface 11 is switched from other application interface to the application interface corresponding to the target data sharing control ("Phone"). The user then shares the target text content 21 through dragging operation 40 to the second display interface 11. It should be noted that, in response to the triggering on the target data sharing control, the second display interface 11 is switched from other application interface to the preset default display interface of the application corresponding to the target data sharing control.

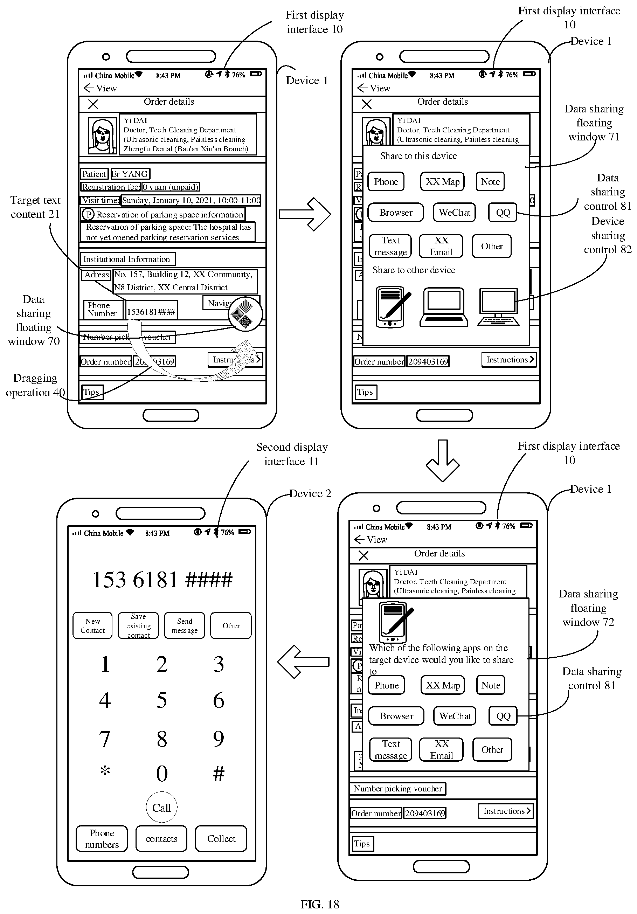

For example, FIG. 18 is a sixth displayed schematic diagram of an optional sharing process of a target text content according to some embodiments of the present disclosure. As shown in FIG. 18, first, the user selects the target text content ("1536181####"), i.e., the target text content 21, in the text recognition content of the to-be-processed image in the first display interface 10. The user then moves the target text content 21 through dragging operation 40 to the data sharing floating window 70 in a thumbnail form. The thumbnail data sharing floating window responds to the triggering operation and expands in the first display interface. As shown, the data sharing floating window 71 not only displays data sharing controls corresponding to different applications for sharing to different applications of the device but also displays device sharing controls 82 corresponding to other devices for sharing to other devices. The user then moves to the target device sharing control of the device sharing controls 82 corresponding to the target device in the data sharing floating window 71 and stays for a preset duration. Further, in response to the triggering on the target device sharing control corresponding to the target device, the data sharing floating window 72 displays the data sharing control 81 corresponding at least one application of the target device (Device 2), allowing the target text content to be shared to the target application of the target device. Finally, in response to the triggering on the target data sharing control ("Phone") corresponding to the target device (Device 2), the target text content is shared to the default display interface (i.e., the second display interface 11) corresponding to the target data sharing control. It should be noted that, the second display interface 11 is the default display interface of the target application of the target device corresponding to the target device sharing control.

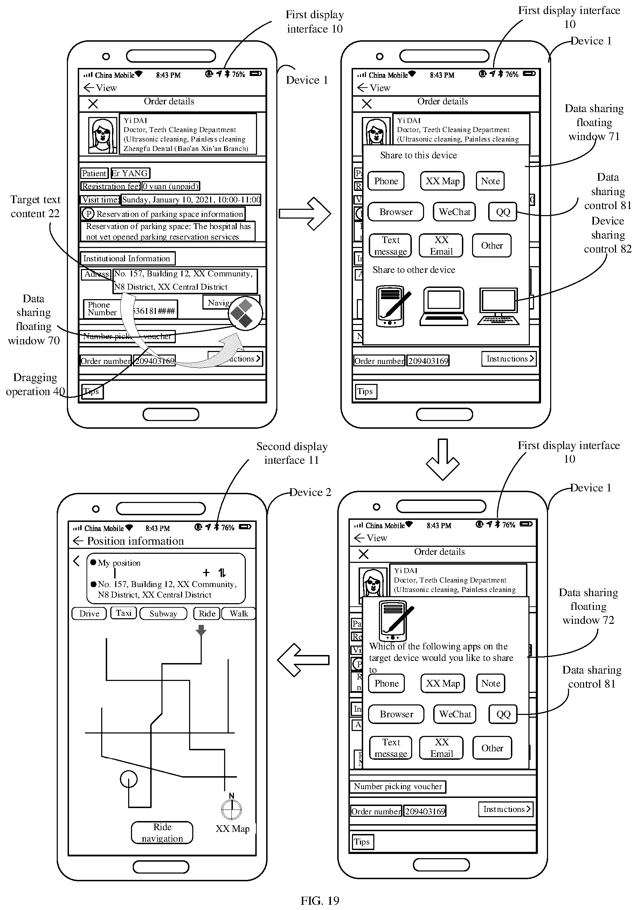

For example, FIG. 19 is a seventh displayed schematic diagram of an optional sharing process of a target text content according to some embodiments of the present disclosure. As shown in FIG. 19, first, the user selects the target text content ("Baocheng Central District..."), i.e., the target text content 22, in the text recognition content of the to-be-processed image in the first display interface 10. The user then moves the target text content 22 through dragging operation 40 to the data sharing floating window 70 in a thumbnail form. The data sharing floating window 70 in a thumbnail form then responds to the triggering operation, and the expanded the data sharing floating window 71 is displayed in the first display interface. The user then movesto the target device sharing control of the device sharing controls 82 in the data sharing floating window 71 and stays for a preset duration. Further, in response to the triggering on the target device sharing control, the data sharing floating window 72 displays the data sharing control corresponding at least one application of the target device. Finally, in response to the triggering on the target data sharing control ("XX Map") corresponding to the target device (Device 2), the target text content is shared to the second display interface 11 of the target device.

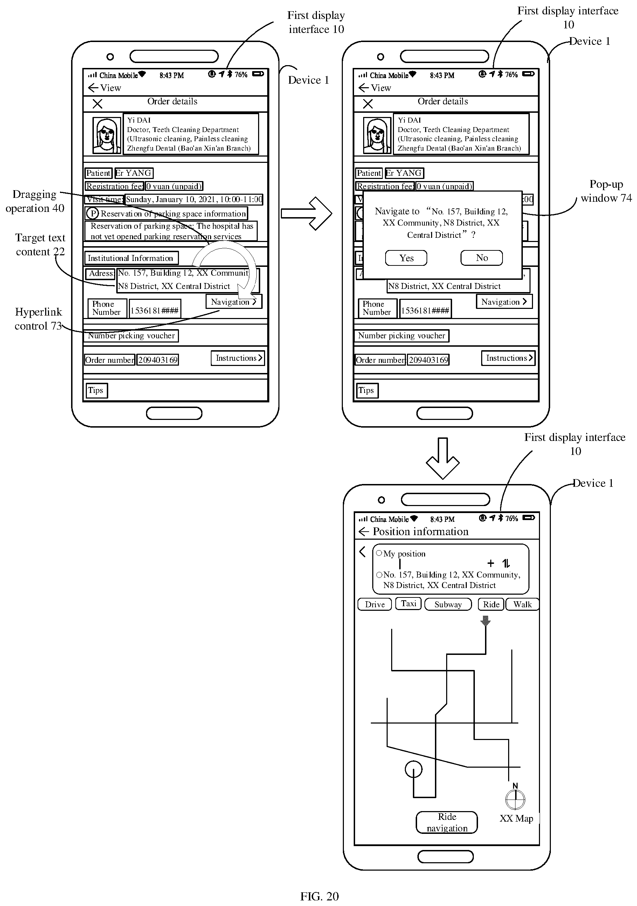

For example, FIG. 20 is an eighth displayed schematic diagram of an optional sharing process of a target text content according to some embodiments of the present disclosure. As shown in FIG. 20, the text recognition content in the first display interface 10 has a hyperlink control 73 corresponding to a hyperlink. For example, a hyperlink text content "XX Central District...", i.e., the target text content 22, is an address-type hyperlink text. The hyperlink control 73 corresponding to the target text content 22 is "Navigate" control. The user may directly click the "Navigation" control to switch to the corresponding application interface for operations such as navigation to the location of the hyperlink text content "XX Central District...". As shown in FIG. 20, the user may move the selected target text content 22 through dragging operation 40 to the hyperlink control 73 "Navigation". After staying on the "Navigation" control for a preset duration, a pop-up window 74 displaying "Navigate to..." appears in the first display interface in response to the triggering on the "Navigation" control. In response to the triggering operation on the pop-up window 74, the image viewing interface in the first display interface 10 is switched to the XX Map interface for operations such as navigation to the location of the selected target text content 22.

In some embodiments, on one hand, when systems of two devices (image text sharing devices) are connected to each other, the target text content may be shared from one device to another through the movement instruction for the target text content. When the target text content is shared across terminals, the target text content may carry paragraph information and text style information for cross-device sharing, thereby improving the capability to share image text content. On the other hand, by implementing cross-terminal sharing and interaction of the target text content, the user experience of extracting useful information from the image is effectively improved, facilitating cross-device sharing of image text content for the user, enhancing the efficiency of text content sharing of the two devices in the system interconnection mode, and improving the interactive diversity of the image text sharing device.

The image text sharing method provided in some embodiments of the present disclosure supports split-screen dragging and cross-terminal sharing of the selected target text content. During the sharing process of the target text content, the target text content may carry the paragraph format and text style of the content of the original image for cross-screen sharing and cross-terminal transmission, so that the text recognition capability of the image is no longer limited to a single device or a single interface, improving user interaction capability to cross-screen data sharing and cross-terminal data sharing. This effectively improves the user experience of extracting useful information from the image, improves the efficiency of text content sharing in the cross-terminal mode or the cross-screen mode, and improves the interactive diversity of the image text sharing device

It should be noted that, in the process of the selected target text content being shared across terminals (i.e., cross-device sharing), since the style information of text content is carried during the data sharing process, a text editor built into the target device (also called the cross-terminal device) is required to adapt to the text style and data format of the target text content (also called cross-terminal text data).

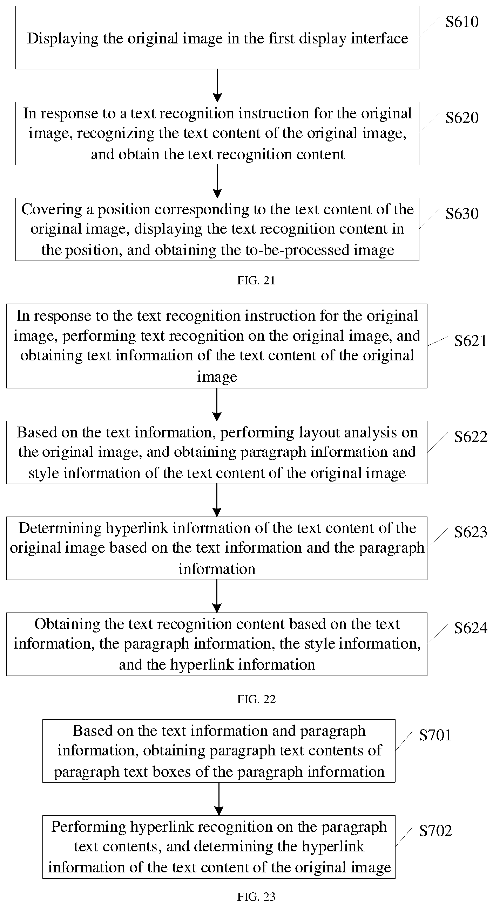

Some embodiments of the present disclosure provide an image text sharing method, as shown in FIG. 21, including operations S610 to S630.

The operation S610 may include: displaying the original image in the first display interface.

In some embodiments, the first display interface of the device (image text sharing device) displays the original image. The original image may be an image captured by the camera of the image text sharing device, an image obtained through screenshot, or an image from a chat session, etc., which is not limited.

For example, as shown in FIG. 2a, the original image may be an image captured by the camera and saved in the gallery. As shown in FIG. 2b, in the "Gallery" interface, the user clicks to select the original image, and the original image is displayed in the first display interface. The original image is displayed in full screen in the first display interface.

The operation S620 may include: in response to a text recognition instruction for the original image, recognizing the text content of the original image, and obtaining the text recognition content.

In some embodiments, for the text recognition content in the first display interface, in response to the text recognition instruction for the original image, the device (image text sharing device) recognizes the text content of the original image and obtains the text recognition content.

In some embodiments, the device (image text sharing device) is required to enable the built-in image text recognition function or download an APP with text recognition capability to recognize the text content of the image in the device.

In some embodiments, the text recognition instruction may be a contact instruction or a non-contact instruction. When the text recognition instruction is a contact instruction, the user may long-press, click, or double-click the first display interface displaying the original image. In response to the triggering operation of the text recognition instruction, the device recognizes the text content of the original image and obtains the text recognition content. When the text recognition instruction is a non-contact instruction, the user may send the text recognition instruction through a preset gesture or a button, etc. In response to the triggering operation of the text recognition instruction, the device recognizes the text content of the original image and obtains the text recognition content.

In some embodiments of the present disclosure, as shown in FIG. 22, the operation S620 may include operations S621 to S622.

The operation S621 may include: in response to the text recognition instruction for the original image, performing text recognition on the original image, and obtaining text information of the text content of the original image.

In some embodiments, the device (image text sharing device) performs the text recognition on the original image through the Optical Character Recognition (OCR) method in response to the text recognition instruction for the original image, and obtains the text information of the text content of the original image.

In some embodiments, the line text information includes at least one line text box, each of the at least one line text box carries a line text content, an identifier, and an angle thereof, the single-character text information includes at least one single-character text, each of the at least one single-character text carries an identifier thereof, and position information thereof in the to-be-processed image.

In some embodiments, each line text box may carry a confidence level thereof for subsequent verification.

In some embodiments, the position information of the single-character text in the to-be-processed image may be coordinate information of the single-character text in the to-be-processed image.

In some embodiments, the identifiers of line text box and single-character text may use different labeling methods, such as an alphabetic label or a numeric label.

The operation S622 may include: based on the text information, performing layout analysis on the original image, and obtaining paragraph information and style information of the text content of the original image.

In some embodiments, the image text sharing device performs paragraph division on the line text contents in the line text boxes through layout analysis performed on the original image, and obtains the paragraph information of the text content of the original image.

In some embodiments, the paragraph information may include at least one paragraph text box, each paragraph text box may carry an identifier thereof, and the identifier of the line text boxes in the paragraph text box.

In some embodiments, each paragraph text box may include one or at least two line text boxes, that is, each paragraph text may include one or at least two line text contents.

In some embodiments, based on the text information, the text style information of each line text content is determined through layout analysis performed on the original image, and the style information of the text content of the original image is obtained.

In some embodiments, the text style information may include color, font, size, etc. of the text content.

In some embodiments, the text size of the line text content in the line text box may be obtained based on the angle and size or height of the line text box.

In some embodiments, the text style information of each single-character text in each line text content may be determined based on the single-character text information of the text information.

In some embodiments, by performing layout analysis on the original image based on the text information, the style information and paragraph information of the text content of the original image may be obtained. On one hand, interactive operations such as single-clicking to select a paragraph may be achieved through the paragraph information, allowing the user to quickly select a paragraph text at the interaction level and select multiple text contents at a paragraph-level. On the other hand, the text recognition content carrying the text style information may be achieved through the style information, making the text style of the text recognition content with the same as that of the content of the original image at the interaction level. This solves the problem of LiveText being unable to obtain text style information, eliminating the need for the user to reset style information for recognized text content. This improves the user experience of text recognition, reduces unnecessary operations, and facilitates subsequent operations of the user on the recognized text content. Since the text recognition content may carry text style information, the user does not need to reset the text style information for the recognized text content, reducing unnecessary operations and facilitating subsequent operations of the user on the recognized text content, thereby improving the efficiency and accuracy of selecting text content.

The operation S623 may include: determining hyperlink information of the text content of the original image based on the text information and the paragraph information.

In some embodiments, the image text sharing device performs the hyperlink analysis on the paragraph text content based on the text information and paragraph information, and obtains the hyperlink information of the text content of the original image.

In some embodiments, the hyperlink (hyperlink information) may be an address, a phone number, an order number, a network address, or an email, etc., which is not limited.

In some embodiments of the present disclosure, as shown in FIG. 23, the operation S623 may include operations S701 to S702.

The operation S701 may include: based on the text information and paragraph information, obtaining paragraph text contents of paragraph text boxes of the paragraph information.

In some embodiments, for the text content in each paragraph text box, it is judged whether the text content of the paragraph text box includes a hyperlink. When the text content of the paragraph text box includes a hyperlink, the hyperlink data of the current paragraph text box is obtained.

In some embodiments, based on the text information, the line text content corresponding to the identifier of the line text box in the paragraph text box is obtained, and the paragraph text content of the paragraph text box is determined.

In some embodiments, the paragraph text box may carry an identifier of at least one line text box. Based on these identifiers of the line text boxes carried by the paragraph text boxes and the current text information, the line text contents corresponding to the identifiers of the line text boxes in the paragraph text box is obtained. Obtaining the paragraph text content based on the line text contents in the paragraph text box may be understood as integrating the line text contents in the paragraph text box to obtain the paragraph text content. In other words, the paragraph text content may include multiple line text contents.

The operation S702 may include: performing hyperlink recognition on the paragraph text contents, and determining the hyperlink information of the text content of the original image.

In some embodiments, based on the preset hyperlink recognition algorithm, hyperlink recognition is performed on the paragraph text contents to determine the hyperlink information of the text content of the original image.

In some embodiments, the method may include: performing the hyperlink recognition on a current paragraph text content of the paragraph text contents, and determining hyperlink texts in the current paragraph text content, each of the hyperlink texts carrying an identifier of a starting single-character text thereof, and a hyperlink type thereof; the hyperlink type including a content hyperlink type and a paragraph hyperlink type; the hyperlink texts being a text content of at least one line of continuous text information corresponding to the content hyperlink type, or the hyperlink texts being a text content of paragraph text information corresponding to the paragraph hyperlink type.

In some embodiments, the identifiers of the paragraph text box may be sorted in a particular order. Based on the order of the identifiers of the paragraph text box, the current paragraph text box may be determined.

In some embodiments, the hyperlink recognition is performed on the current paragraph text content, for example, the hyperlink recognition is performed through combining contextual semantics. When the hyperlink recognition is performed on the current paragraph text content, the current paragraph text may be judged in order based on the identifier or the position information of the single-character text. When the current paragraph text is determined to belong a hyperlink, the hyperlink data of current hyperlink is obtained based on the identifier or position information of the single-character text.

In some embodiments, the hyperlink type may be a phone number, an address, an email, or a network address, etc. The hyperlink text may be a text content at a paragraph-level, it should be understood that the hyperlink text may be a paragraph text. The hyperlink text may be at least one line of continuous text content in the text content at a paragraph-level. In other words, the hyperlink text may be a content at a line-level text, a text content at a paragraph-level, or at least one line of continuous text content in a text content at a paragraph-level.

In some embodiments, the method may include: continuing to perform the hyperlink recognition for a next paragraph text content of the paragraph text contents, and obtaining hyperlink data of the next paragraph text content until the paragraph text contents are performed the hyperlink recognition, hyperlink texts in the paragraph text contents are determined, and hyperlink data of the paragraph text contents are obtained, and obtaining the hyperlink information of the text content of the original image.

In some embodiments, the hyperlink information of text content of the original image is determined based on the text information and the paragraph information, the user may select the hyperlink across lines at the interaction level, thereby solving the problem of LiveText being unable to render a multi-line hyperlink, allowing the user to quickly select the hyperlink across lines and improving the interactive capability, and improving efficiency and accuracy of the user selecting text content through the image text sharing device.

The operation S624 may include: obtaining the text recognition content based on the text information, the paragraph information, the style information, and the hyperlink information.

In some embodiments, the image text sharing device obtains the text recognition content based on the text information, the paragraph information, the style information, and the hyperlink information. In other words, the text recognition content may carry the text information, the paragraph information, the style information, and the hyperlink information of the text content of the original image.

The operation S630 may include: covering a position corresponding to the text content of the original image, displaying the text recognition content in the position, and obtaining the to-be-processed image.

In some embodiments, after recognizing the text content of the original image, the image text sharing device covers the position corresponding to the content of the original image and displays the text recognition content in the position to obtain the to-be-processed image, the to-be-processed image may be covered on the original image in a form of a floating layer.

In some embodiments, based on the text information, the paragraph information, and the hyperlink information of the text recognition content, the hyperlink text in the text recognition content is determined.

In some embodiments, the hyperlink text in the text recognition content may be a text content of at least one line of continuous text information corresponding to the content hyperlink type, or may be a text content corresponding to the paragraph hyperlink type and including at least one paragraph text information.

In some embodiments, the hyperlink text in the text recognition content is rendered based on a first preset rendering logic to obtain a first rendered text content.

In some embodiments, the first preset rendering logic represents the rendering logic for displaying the hyperlink text on the floating layer (to-be-processed image). For example, the first preset rendering logic may include highlighting the text content, highlighting the background of text content, underlining the text content, or changing the font style of text content, etc.

In some embodiments, the single-character text in the text recognition content is rendered based on a second preset rendering logic to obtain a second rendered text content.

In some embodiments, the text content in the text recognition content other than hyperlink text is rendered based on the second preset rendering logic to obtain the second rendered text content.

In some embodiments, the second preset rendering logic is the same as the first preset rendering logic, and reference may be made to the description of the first preset rendering logic, which will not be repeated here.

In some embodiments, based on the text style information corresponding to the first rendered text content and the text style information corresponding to the second rendered text content, the first and second rendered text contents are rendered to be stacked on the position corresponding to the image layer of the original image, the to-be-processed image is obtained.

In some embodiments, the paragraph text content (i.e., the text content at a paragraph-level) may carry the text information, the paragraph information, the style information, and the hyperlink information of the current paragraph text content.

In some embodiments, the rendered text content at a paragraph-level is covered on the position corresponding to the content of the original image and is displayed to obtain the to-be-processed image.

In some embodiments, the style information of the rendered text content at a paragraph-level is the same as that of the content of the original image.

In some embodiments, the text recognition content is covered on the position corresponding to the content of the original image, that is, the position of the text recognition content corresponds to the position of the content of the original image.

In some embodiments, the hyperlink in the paragraph text content may be displayed in the to-be-processed image through a preset rendering method, such as highlighting the hyperlink or highlighting the background of the hyperlink text, to help the user identify the hyperlink text in the text recognition content.

For example, as shown in FIG. 2c, the text recognition content is displayed in the to-be-processed image displayed in the first display interface. It may be seen that the to-be-processed image is displayed in a form of a floating layer above the original image, and the text recognition content is covered on the position corresponding to the content of the original image. Additionally, the text recognition content carries the paragraph information of text content of the original image, so that the text recognition content includes one or at least two paragraph texts. Furthermore, the text recognition content carries the text style information of text content of the original image, so that the text style of the text recognition content is the same as that of the text content of the original image. The text style may include text size, text color, and text font, etc.

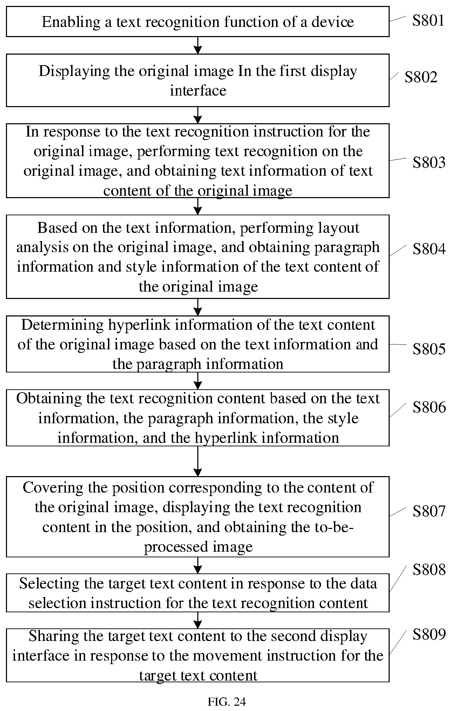

Some embodiments of the present disclosure provide an image text sharing method, performed by a device with a display screen, as shown in FIG. 24, including operations S801 to S809.

The operation S801 may include: enabling a text recognition function of a device.

In some embodiments, the image text sharing device has an image text recognition function, which may be built-in function of the device or achieved by downloading an APP with text recognition function.

The operation S802 may include: displaying the original image in the first display interface.

In some embodiments, the original image with the text content is displayed in the first display interface of the image text sharing device.

The operation S803 may include: in response to the text recognition instruction for the original image, performing text recognition on the original image, and obtaining text information of text content of the original image.

In some embodiments, the image text sharing device performs the text recognition on the original image in response to the text recognition instruction for the original image, and obtains the text information of the text content of the original image.

In some embodiments, the line text information includes at least one line text box, each of the at least one line text box carries a line text content, an identifier, and an angle thereof, the single-character text information includes at least one single-character text, each of the at least one single-character text carries an identifier thereof, and position information thereof in the to-be-processed image.

The operation S804 may include: based on the text information, performing layout analysis on the original image, and obtaining paragraph information and style information of the text content of the original image.

In some embodiments, the image text sharing device performs the layout analysis on the original image based on the text information of the text content of the original image, and obtains the paragraph information and the style information of the text content of the original image.

In some embodiments, the paragraph information includes at least one paragraph text box, each of the at least one paragraph text box carries an identifier thereof, and identifiers of line text boxes thereof.

In some embodiments, the style information may include the font color information and font style information of the line text content.

The operation S805 may include: determining hyperlink information of the text content of the original image based on the text information and the paragraph information.

In some embodiments, the image text sharing device performs the hyperlink analysis on the paragraph text content based on the text information and the paragraph information, and obtains the hyperlink information of the text content of the original image.

In some embodiments, the hyperlink data may carry the identifier of the starting single-character text of each hyperlink, the hyperlink type corresponding to the hyperlink, and the hyperlink text corresponding to the hyperlink. The hyperlink text is a text content at a paragraph-level or at least one line of continuous text content.

The operation S806 may include: obtaining the text recognition content based on the text information, the paragraph information, the style information, and the hyperlink information.

In some embodiments, the text recognition content may carry the text information, the paragraph information, the style information, and the hyperlink information of text content of the original image.

In some embodiments, the text recognition content may be called rendering data. Based on the text information, the paragraph information, the style information, and the hyperlink information, the rendering data is generated based on a particular rendering logic. In other words, the rendering data may carry the text information, the paragraph information, the style information, and the hyperlink information of text content of the original image.

The operation S807 may include: covering the position corresponding to the content of the original image, displaying the text recognition content in the position, and obtaining the to-be-processed image.

In some embodiments, hyperlink drawing and text highlighting are completed based on the rendering data (also called the text recognition content), achieving floating layer rendering. In other words, the position corresponding to the content of the original image is covered and the text recognition content is displayed in the position to obtain the to-be-processed image (also called the floating layer).

The operation S808 may include: selecting the target text content in response to the data selection instruction for the text recognition content.

In some embodiments, based on an event response module, user interaction is responded, and interface rendering is refreshed. An event response logic may include but is not limited to: single-clicking, double-clicking, lightly sliding selection, long-press sliding selection, dragging handle, cross-line selection, split-screen dragging, and cross-terminal dragging, etc.

For example, compared to the single-clicking selection of LiveText technology, this method adds the function including single-clicking to select a paragraph and cross-line text sliding selection, achieving selection of multiple texts.

The operation S809 may include: sharing the target text content to the second display interface in response to the movement instruction for the target text content.

In some embodiments, after receiving the movement instruction for the target text content, the image text sharing device shares the target text content to the second display interface.

In some embodiments, in split-screen mode, the selected text is long-pressed to be dragged and shared. During the sharing progress, the target text content may carry the paragraph information and the style information of the text. On a device supporting the Pantanal system, the selected target text content may be dragged to a cross-device device through system interconnection, achieving cross-device text sharing.

In some embodiments, a simple interactive solution for operating image text is provided, allowing the user to operate image text like text. The interactive solution adds interactive method not available in ordinary text operations, such as single-clicking to select a paragraph, selection of multiple cross-line data, and cross-screen dragging of text format data. This effectively improves the user experience of extracting useful information from an image and improves the efficiency of text content sharing in cross-terminal mode or cross-screen mode.

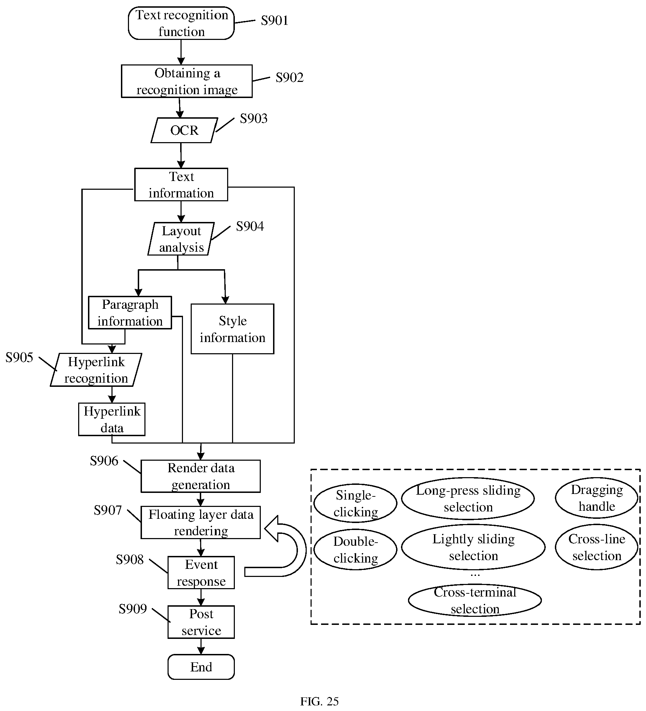

Some embodiments of the present disclosure provide an image text sharing method, performed a device with a display screen, as shown in FIG. 25, including operations S901 to S909.

The operation S901 may include: a text recognition function, i.e., the user enabling the text recognition function of an image text sharing device.

The operation S902 may include: obtaining a recognition image, i.e., displaying an original image (also called the recognition image) with text content in the first display interface of the image text sharing device.

The operation S903 may include: OCR, i.e., the image text sharing device performing text recognition on the original image (recognition image) through an OCR technology, obtaining the text information of the text content of the original image (as shown in the drawings).

The operation S904 may include: layout analysis, i.e., the image text sharing device performing layout analysis on the original image (recognition image) based on the text information, obtaining paragraph information (as shown in the drawings) and style information (as shown in the drawings) of the text content of the original image.

The operation S905 may include: hyperlink recognition, i.e., the image text sharing device determining hyperlink information (as shown in the drawings) of the text content of the original image (recognition image) based on text information and paragraph information.

The operation S906 may include: render data generation, i.e., the image text sharing device generating rendering data based on the hyperlink information (as shown in the drawings), the text information (as shown in the drawings), and the paragraph information (as shown in the drawings) based on a particular rendering logic, the rendering data carrying all the text information, paragraph information, and style information of the image.

The operation S907 may include: floating layer data rendering, i.e., the image text sharing device completing hyperlink drawing and highlighting text based on the rendering data, achieving floating layer (also called the to-be-processed image) rendering.

The operation S908 may include: event response, i.e., the image text sharing device responding to user interaction based on an event response module and refreshing the interface rendering. The event response logic may include but is not limited to: single-clicking, double-clicking, lightly sliding selection, long-press sliding selection, dragging handle, cross-line selection, split-screen dragging, and cross-terminal dragging, etc. (as shown in the drawings).

The operation S909 may include: post service, i.e., the image text sharing device completing an underlying logic flow based on the response to user interaction logic.

In some embodiments, on one hand, some embodiments of the present disclosure add paragraph capability to image text. The interaction not only supports the traditional TextView interaction method of single-clicking for word segmentation but also supports single-clicking to select a paragraph in particular scenarios. On the other hand, the interaction supports the user in selecting multiple lines or paragraphs of image text across lines, allowing the user to exclude useless image text information and collect useful information from image text. Furthermore, the interaction innovatively proposes split-screen dragging and cross-terminal sharing of image-format text content, supporting cross-screen and even cross-device transmission of paragraph formats and text styles. This ensures that the text recognition capability is no longer limited to a single device, effectively improving the interactive diversity of the text sharing device for the user. Additionally, interactive operations such as clicking to select paragraph text or line text may be achieved through paragraph information, allowing quick selection of paragraph-level or line-level text content at the interaction level, achieving rapid extraction of useful information from the text recognition content, improving the interactive diversity of image text content while enhancing the efficiency and accuracy of selecting image text content.

It should be noted that although the operations of the methods in the present disclosure are described in a particular order in the accompanying drawings, this does not require or imply that the operations must be performed in this order or that all operations must be performed to achieve the desired results. Alternatively, some operations may be omitted, multiple operations may be combined into one, and/or one operation may be divided into multiple operations. Alternatively, operations from different embodiments may be combined into a new technical solution.

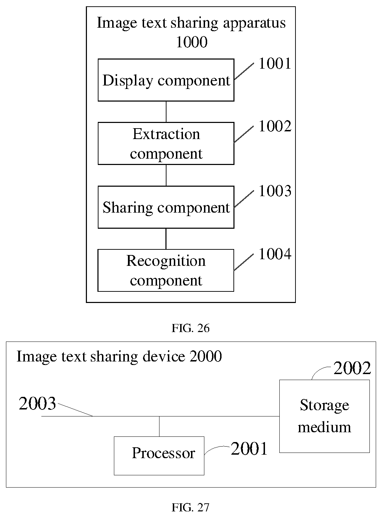

Based on the foregoing embodiments, a structural schematic diagram of an optional image text sharing apparatus is provided in some embodiments of the present disclosure. The apparatus has a display screen, as shown in FIG. 26, and may include a display component 1001, an extraction component 1002, a sharing component 1003, and a recognition component 1004.

The display component 1001 is configured to: display a text recognition content in a to-be-processed image displayed in a first display interface, a text style of the text recognition content isthe same as a text style of a text content of an original image.

The extraction component 1002 is configured to: select a target text content in response to a data selection instruction for the text recognition content, the target text content represents a text content at a paragraph-level or a line-level.

The sharing component 1003 is configured to: share the target text content to a second display interface in response to a movement instruction for the target text content.

In some embodiments, the second display interface and the first display interface are displayed in different regions of the same device. In some embodiments, the first display interface is displayed in a first device, and the second display interface is displayed in a second device.

In some embodiments, the operating systems of the first device and the second device are different.

In some embodiments, the text recognition content is covered on the position corresponding to the content of the original image.

In some embodiments, the data selection instruction may include first data trigger instructions, which are data trigger instructions for text recognition content corresponding to a hyperlink type. The extraction component 1002 is further configured to: in a case where the text recognition content pointed to by the first data trigger instructions correspond to a content hyperlink type, in response to the first data trigger instructions for the text recognition content, select the target text content of at least one line of continuous text information corresponding to the content hyperlink type; in a case where the text recognition content pointed to by the first data trigger instructions correspond to a paragraph hyperlink type, in response to the first data trigger instructions for the text recognition content, select the target text content corresponding to the paragraph hyperlink type, the target text content including at least one paragraph text information.

In some embodiments, the extraction component 1002 may be configured to: in a case where the text recognition content pointed to by a current first data trigger instruction of the first data trigger instructions corresponds to the paragraph hyperlink type, in response to the current first data trigger instruction for the text recognition content, display a current paragraph text in a current triggered region based on a first preset display method; continue to receive a next first data trigger instruction of the first data trigger instructions, display a next paragraph text in a next triggered region based on the first preset display method until not no first data trigger instruction is received, and obtain the target text content including at least one paragraph text.

In some embodiments, the data selection instruction may include a data sliding instruction at a line-level, which are data sliding instructions for text recognition content at a line-level. The extraction component 1002 may be configured to: display a currently selected line text based on a second preset display method in response to a current data sliding instruction of the data sliding instructions at the line-level for the text recognition content; continue to receive a next data sliding instruction of the data sliding instructions at the line-level, display a next selected line text based on the second preset display method until no data sliding instruction at the line-level is received, and obtain the target text content including at least two line texts at different lines or at least two line texts across lines.

In some embodiments, the extraction component 1002 may be configured to: display a currently selected single-character text based on a third preset display method in response to a current second data trigger instruction of second data trigger instructions at the single-character-level for the text recognition content; continue to receive a next second data trigger instruction of second data trigger instructions at the single-character-level, display a next selected single-character text based on the third preset display method until no second data trigger instruction at the single-character-level is received, and obtain the target text content including at least two non-consecutive single-character texts.

In some embodiments, the sharing component 1003 is further configured to: in response to the movement instruction for the target text content, move the target text content to the second display interface adjacent to the first display interface and stop moving, share the target text content to the second display interface.

In some embodiments, the sharing component 1003 may be configured to: in response to the movement instruction for the target text content, move the target text content to a data sharing floating window displayed in the first display interface, the data sharing floating window displaying at least one data sharing control; continue to move the target text content to a target data sharing control in the data sharing floating window and stopping moving, and share the target text content to the second display interface corresponding to the target data sharing control.

In some embodiments, the display component 1001 may be configured to display the original image in the first display interface.

In some embodiments, the apparatus 1000 may include a recognition component 1004, configured to: in response to a text recognition instruction for the original image, recognize a text content of the original image, and obtain the text recognition content; cover the position corresponding to the content of the original image, display the text recognition content in the position, and obtain the to-be-processed image.

In some embodiments, the recognition component 1004 may be configured to: in response to the text recognition instruction for the original image, perform text recognition on the original image, and obtain text information of the text content of the original image; based on the text information, perform layout analysis on the original image, and obtain paragraph information and style information of the text content of the original image; determine hyperlink information of the text content of the original image based on the text information and paragraph information; obtain the text recognition content based on the text information, the paragraph information, the style information, and the hyperlink information.

In some embodiments, the text information may include line text information and single-character text information. The line text information includes at least one line text box, each of the at least one line text box carries a line text content, an identifier, and an angle thereof; The single-character text information includes at least one single-character text, each of the at least one single-character text carries an identifier thereof, and position information thereof in the to-be-processed image.

In some embodiments, the recognition component 1004 may be configured to: based on the text information, perform paragraph division on line text contents in line text information, and obtain the paragraph information, the paragraph information including at least one paragraph text box, each of the at least one paragraph text box carries an identifier thereof, and identifiers of line text boxes thereof; and based on the text information, determine text style information of each of the line text contents, and obtain the style information of the text content of the original image.

In some embodiments, the recognition component 1004 may be configured to: based on the text information and paragraph information, obtain paragraph text contents of paragraph text boxes of the paragraph information; and perform hyperlink recognition on the paragraph text contents, and determin the hyperlink information of the text content of the original image.

In some embodiments, the recognition component 1004 may be configured to: perform the hyperlink recognition on a current paragraph text content of the paragraph text contents, and determine hyperlink texts in the current paragraph text content, each of the hyperlink texts carries an identifier of a starting single-character text thereof, and a hyperlink type thereof; the hyperlink type including a content hyperlink type and a paragraph hyperlink type; the hyperlink texts being a text content of at least one line of continuous text information corresponding to the content hyperlink type, or the hyperlink texts being a text content of paragraph text information corresponding to the paragraph hyperlink type; and continue to perform the hyperlink recognition for a next paragraph text content of the paragraph text contents, and obtain hyperlink data of the next paragraph text content until the paragraph text contents are performed the hyperlink recognition, hyperlink texts in the paragraph text contents are determined, and hyperlink data of the paragraph text contents are obtained, and obtain the hyperlink information of the text content of the original image.

In some embodiments, the recognition component 1004 may be configured to: determine a hyperlink text of the text recognition content based on text information, paragraph information, and hyperlink information of the text recognition content; render the hyperlink text of the text recognition content based on a first preset rendering logic, and obtain a first rendered text content rendering single-character texts of the text recognition content based on a second preset rendering logic, and obtain a second rendered text content; and based on text style information corresponding to the first rendered text content and text style information corresponding to second rendered text content, stack the first tendered text content and the second rendered text content on a position corresponding to an image layer of the original image, and obtaining the to-be-processed image.

It should be noted that the division of modules in the image text sharing apparatus in some embodiments is illustrative and serves only as a logical functional division. In practice, other division methods may be used. Additionally, the functional units in each embodiment of the present disclosure may be integrated into one processing unit or exist independently, or two or more units may be integrated into one unit. The integrated units may be implemented in a form a hardware, in a form of a software functional unit, or in a form of combination of both a hardware and a software.

It should be noted that, in some embodiments, if the above method is implemented in the form of a software functional module and sold or used as an independent product, software functional module may be stored in a computer-readable storage medium. Based on such understanding, the technical solution of the present disclosure, in essence or the contribution to the prior art, or all or part of the technical solution may be embodied in the form of a software product. The computer software product may be stored in a storage medium. The software product may include a number of instructions causing an electronic device to perform all or parts of the operations of the above-described methods of various embodiments of the present disclosure. The foregoing storage medium may include various medium which are able to store program codes. The storage medium may include a U disk, a removable hard disk, a Read-Only Memory (ROM), a magnetic disk, an optical disk, or other medium storing a program code.

FIG. 27 a structural schematic diagram of an optional image text sharing device according to some embodiments of the present disclosure. As shown in FIG. 27, the image text sharing device 2000 may include following.

A processor 2001 and a storage medium 2002 storing executable instructions for the processor 2001 are provided. The storage medium 2002 depends on the processor 2001 to perform operations through a communication bus 2003. When the instructions are executed by the processor 2001, the image text sharing method described in one or more of the above embodiments is performed.

It should be noted that, in practice, the components of the terminal are coupled together through the communication bus 2003. It should be understood that the communication bus 2003 is configured to implement communication connection between these components. The communication bus 2003 may include not only a data bus but also a power bus, a control bus, and a status signal bus. However, for clarity, all buses are labeled as the communication bus 2003 in FIG. 27.

Some embodiments of the present disclosure provide a computer storage medium storing executable instructions, when the executable instructions are executed by one or more processors, the processor performs the image text sharing method described in one or more of the above embodiments.

Some embodiments of the present disclosure provide a computer program product including instructions that, when run on a computer, cause the computer to perform the operation of the image text sharing method described in the method embodiments.

Those skilled in the art should understand that the embodiments of the present disclosure may be provided as a method, a system, or a computer program product. Therefore, he embodiments of the present disclosure may take the form of hardware embodiments, software embodiments, or embodiments combining software and hardware. Moreover, the embodiments of the present disclosure may take the form of a computer program product implemented on one or more computer-usable storage medium (including but not limited to a disk storage and an optical storage) including a computer-usable program code.

It should be noted that the descriptions of the storage medium and device embodiments above are similar to the descriptions of the method embodiments and have similar technical effects. For technical details not disclosed in the storage medium and device embodiments of the present disclosure, please refer to the descriptions in the method embodiments.

It should be understood that references to "an embodiment", or "some embodiments" throughout the specification mean that particular features, structures, or characteristics related to the embodiment are included in at least one embodiment of the present disclosure. Therefore, the phrases "in an embodiment", or "in some embodiments" appearing throughout the specification do not necessarily refer to the same embodiment. Additionally, these particular features, structures, or characteristics may be combined in any suitable manner in one or more embodiments. It should be understood that in the various embodiments of the present disclosure, the size of the sequence numbers of the above processes does not imply the order of execution. The order of execution of each process should be determined by its function and internal logic, and should not constitute any limitation on the implementation process of the embodiments of the present disclosure. The above embodiment numbers are for description only and do not represent the advantages or disadvantages of the embodiments. The description of each embodiment in the previous text tends to emphasize the differences between them, and their similarities or similarities can be referenced from each other. For the sake of simplicity, they will not be repeated.

The term "and/or" in embodiments of the present disclosure is only an association relationship describing the associated objects, which means that there can be three kinds of relationships; for example, A and/or B can mean three situations including: A exists alone, A and B exist simultaneously, and B exists alone.

It should be noted that the terms "include", "include", "contain", or any other changes used in the present disclosure are intended to cover non-exclusive inclusion, so that a process, a method, a product, or device that includes a series of elements not only includes the elements, but also other elements that are not explicitly listed, or also includes inherent elements of the process, the method, the product, or the device. In case where there are no further limitations, elements limited by the statement "include ..." do not exclude existence of other identical elements in the process, the method, the product, or the device that includes the elements.

In some embodiments provided herein, it should be understood that the disclosed systems, apparatuses, and methods may be implemented in other ways. For example, the device embodiments described above are merely illustrative. For example, the division of the above modules is only a logical function division. In actual implementation, there may be another division manner. For example, multiple modules or components may be combined or integrated into another system, or some features can be ignored or not executed. In addition, the mutual coupling or direct coupling or communication connection shown or discussed may be an indirect coupling or communication connection through some interfaces, devices or modules, and may be electrical or in other forms

The modules described above as separate components may or may not be physically separated, and the components illustrated as modules may or may not be physical modules. The modules may be located in one place, or may be distributed to multiple network units. Some or all of the units may be selected according to actual needs to achieve the purpose of a solution of the embodiments.

Additionally, the functional modules in the embodiments of the present disclosure may be integrated into one processing unit, or each module may exist independently, or two or more modules may be integrated into one unit. The integrated modules may be implemented in hardware or in hardware combined with software functional modules.

Those skilled in the art may understand that all or part of the operations in the method embodiments may be performed by a hardware related to program instructions. The program may be stored in a computer-readable storage medium, and when executed, performs the operations of the method embodiments. The storage medium may include a mobile storage device, a ROM, a magnetic disk, an optical disk, and other medium that may store program code.

Alternatively, the above-described integrated units may be stored in a computer-readable storage medium if the integrated unit is implemented in the form of a software functional module and sold or used as a standalone product. Based on such understanding, the technical solution of the present disclosure, in essence or the contribution to the prior art, or all or part of the technical solution may be embodied in the form of a software product. The software product may be stored in a storage medium. The software product may include a number of instructions causing a computer device to perform all or parts of the operations of the above-described methods of various embodiments of the present disclosure. The foregoing memory may include various media which are able to store program codes. The storage medium may include a removable storage device, a ROM, a magnetic disk, an optical disk, or other medium storing a program code.

The methods disclosed in some method embodiments of the present disclosure may be combined arbitrarily without conflict to form a new method embodiment.

The features disclosed in some product embodiments of the present disclosure may be combined arbitrarily without conflict to form a new product embodiment.

The features disclosed in some method or device embodiments of the present disclosure may be combined arbitrarily without conflict to form a new method or device embodiment.

The above descriptions are merely embodiments of the present disclosure and are not intended to limit the scope of the present disclosure. Any changes or replacements within the scope disclosed in the present disclosure that those skilled in the art can easily conceive of should be included in the scope of the present disclosure. Therefore, the scope of the present disclosure should be based on the scope of the claims.

### Utility

An image text sharing method, a device, and a computer-readable storage medium are provided and applied to a device with a screen display. The method includes: displaying a text recognition content in a to-be-processed image displayed in a first display interface, a text style of the text recognition content being the same as a text style of a text content of an original image; selecting a target text content in response to a data selection instruction for the text recognition content, the target text content representing text content at a paragraph-level or a line-level; and sharing the target text content to a second display interface in response to a movement instruction for the target text content. On one hand, the text recognition content is displayed in the to-be-processed image displayed in the first display interface. Since the text recognition content may carry the text style information of text content of the original image, the text style of the text recognition content displayed at the interaction level is the same as the text style of text content of the original image. On the other hand, in response to the data selection instruction for the text recognition content, the target text content is selected. The target text content represents paragraph-level or line-level text content. Since the text recognition content may carry the paragraph information and line text information of text content of the original image, interactive operations such as single-clicking to select paragraph text or line text may be achieved through paragraph information, allowing quick selection of paragraph-level or line-level text content at the interaction level. This achieves rapid extraction of useful information from the text recognition content, improvs the applicability of text recognition content in interactive scenarios, and enhancing the interactive diversity of image text content. On the other hand, in response to the movement instruction for the target text content, the target text content is shared to the second display interface. The movement instruction for the target text content may move the target text content to the second display interface adjacent to the first display interface. When the target text content is shared in an across-screen manner, the target text content may carry paragraph information and text style information for cross-screen sharing, thereby improving the capability of sharing the image text content. This achieves multiple interactive methods for sharing the text recognition content, further enhancing the diversity of image text content at the interaction level.

## Claims

1. An image text sharing method, performed by a device with a display screen, and the method comprising:
displaying a text recognition content in a to-be-processed image displayed in a first display interface, a text style of the text recognition content being the same as a text style of a text content of an original image;
selecting a target text content in response to a data selection instruction for the text recognition content, the target text content representing a text content at a paragraph-level or a line-level; and
sharing the target text content to a second display interface in response to a movement instruction for the target text content.

2. The method as claimed in claim 1, wherein the second display interface and the first display interface are displayed in different regions of a same device; or
the first display interface is displayed in a first device, and the second display interface is displayed in a second device.

3. The method as claimed in claim 2, wherein operating systems of the first device and the second device are different.

4. The method as claimed in claim 1, wherein the text recognition content is covered on a position corresponding to a content of the original image.

5. The method as claimed in claim 1, wherein the data selection instruction comprises first data trigger instructions, and the first data trigger instructions are data trigger instructions for the text recognition content corresponding to a hyperlink type;
the selecting a target text content in response to a data selection instruction for the text recognition content, comprises:
in a case where the text recognition content pointed to by the first data trigger instructions corresponds to a content hyperlink type, in response to the first data trigger instructions for the text recognition content, selecting the target text content of at least one line of continuous text information corresponding to the content hyperlink type; and
in a case where the text recognition content pointed to by the first data trigger instructions corresponds to a paragraph hyperlink type, in response to the first data trigger instructions for the text recognition content, selecting the target text content corresponding to the paragraph hyperlink type, the target text content comprising at least one paragraph text information.

6. The method as claimed in claim 5, wherein the in a case where the text recognition content pointed to by the first data trigger instructions correspond to a paragraph hyperlink type, in response to the first data trigger instructions for the text recognition content, selecting the target text content corresponding to the paragraph hyperlink type, the target text content comprising at least one paragraph text information, comprises:
in a case where the text recognition content pointed to by a current first data trigger instruction of the first data trigger instructions corresponds to the paragraph hyperlink type, in response to the current first data trigger instruction for the text recognition content, displaying a current paragraph text in a current triggered region based on a first preset display method; and
continuing to receive a next first data trigger instruction of the first data trigger instructions, displaying a next paragraph text in a next triggered region based on the first preset display method until not no first data trigger instruction is received, and obtaining the target text content including at least one paragraph text.

7. The method as claimed in claim 1, wherein the data selection instruction comprises data sliding instructions at a line-level, and the data sliding instructions at the line-level is data sliding instructions for the text recognition content at a line-level;
the selecting a target text content in response to a data selection instruction for the text recognition content, comprises:
displaying a currently selected line text based on a second preset display method in response to a current data sliding instruction of the data sliding instructions at the line-level for the text recognition content; and
continuing to receive a next data sliding instruction of the data sliding instructions at the line-level, displaying a next selected line text based on the second preset display method until no data sliding instruction at the line-level is received, and obtaining the target text content comprising at least two line texts at different lines or at least two line texts across lines.

8. The method as claimed in claim 1, wherein the data selection instruction comprises second data trigger instructions at a single-character-level, and the second data trigger instructions are data trigger instructions for the text recognition content at a single-character-level;
the selecting a target text content in response to a data selection instruction for the text recognition content, comprises:
displaying a currently selected single-character text based on a third preset display method in response to a current second data trigger instruction of second data trigger instructions at the single-character-level for the text recognition content;
continuing to receive a next second data trigger instruction of second data trigger instructions at the single-character-level, displaying a next selected single-character text based on the third preset display method until no second data trigger instruction at the single-character-level is received, and obtaining the target text content comprising at least two non-consecutive single-character texts.

9. The method as claimed in any one of claims 1 to 8, wherein the sharing the target text content to a second display interface in response to a movement instruction for the target text content, comprises:
in response to the movement instruction for the target text content, moving the target text content to the second display interface adjacent to the first display interface and stopping moving, and sharing the target text content to the second display interface.

10. The method as claimed in any one of claims 1 to 8, wherein the sharing the target text content to a second display interface in response to a movement instruction for the target text content, comprises:
in response to the movement instruction for the target text content, moving the target text content to a data sharing floating window displayed in the first display interface, the data sharing floating window displaying at least one data sharing control; and
continuing to move the target text content to a target data sharing control in the data sharing floating window and stopping moving, and sharing the target text content to the second display interface corresponding to the target data sharing control.

11. The method as claimed in any one of claims 1 to 8, further comprising:
Displaying the original image in the first display interface;
in response to a text recognition instruction for the original image, recognizing the text content of the original image, and obtaining the text recognition content; and
covering a position corresponding to the text content of the original image, displaying the text recognition content in the position, and obtaining the to-be-processed image.

12. The method as claimed in claim 11, wherein the in response to a text recognition instruction for the original image, recognizing the text content of the original image, and obtaining the text recognition content, comprises:
in response to the text recognition instruction for the original image, performing text recognition on the original image, and obtaining text information of the text content of the original image;
based on the text information, performing layout analysis on the original image, and obtaining paragraph information and style information of the text content of the original image;
determining hyperlink information of the text content of the original image based on the text information and the paragraph information; and
obtaining the text recognition content based on the text information, the paragraph information, the style information, and the hyperlink information.

13. The method as claimed in claim 12, wherein the text information comprises line text information and single-character text information;
the line text information comprises at least one line text box, each of the at least one line text box carries a line text content, an identifier, and an angle thereof; and
the single-character text information comprises at least one single-character text, each of the at least one single-character text carries an identifier thereof, and position information thereof in the to-be-processed image.

14. The method as claimed in claim 12, wherein the based on the text information, performing layout analysis on the original image, and obtaining paragraph information and style information of the text content of the original image, comprises:
based on the text information, performing paragraph division on line text contents in line text information, and obtaining the paragraph information, the paragraph information comprising at least one paragraph text box, each of the at least one paragraph text box carries an identifier thereof, and identifiers of line text boxes thereof; and
based on the text information, determining text style information of each of the line text contents, and obtaining the style information of the text content of the original image.

15. The method as claimed in claim 12, wherein the determining hyperlink information of the text content of the original image based on the text information and the paragraph information, comprises:
based on the text information and paragraph information, obtaining paragraph text contents of paragraph text boxes of the paragraph information; and
performing hyperlink recognition on the paragraph text contents, and determining the hyperlink information of the text content of the original image.

16. The method as claimed in claim 15, wherein the performing hyperlink recognition on the paragraph text contents, and determining the hyperlink information of the text content of the original image, comprises:
performing the hyperlink recognition on a current paragraph text content of the paragraph text contents, and determining hyperlink texts in the current paragraph text content, each of the hyperlink texts carrying an identifier of a starting single-character text thereof, and a hyperlink type thereof; the hyperlink type comprising a content hyperlink type and a paragraph hyperlink type; the hyperlink texts being a text content of at least one line of continuous text information corresponding to the content hyperlink type, or the hyperlink texts being a text content of paragraph text information corresponding to the paragraph hyperlink type; and
continuing to perform the hyperlink recognition for a next paragraph text content of the paragraph text contents, and obtaining hyperlink data of the next paragraph text content until the paragraph text contents are performed the hyperlink recognition, hyperlink texts in the paragraph text contents are determined, and hyperlink data of the paragraph text contents are obtained, and obtaining the hyperlink information of the text content of the original image.

17. The method as claimed in claim 11, wherein the covering a position corresponding to the text content of the original image, displaying the text recognition content in the position, and obtaining the to-be-processed image, comprises:
determining a hyperlink text of the text recognition content based on text information, paragraph information, and hyperlink information of the text recognition content;
rendering the hyperlink text of the text recognition content based on a first preset rendering logic, and obtaining a first rendered text content;
rendering single-character texts of the text recognition content based on a second preset rendering logic, and obtaining a second rendered text content; and
based on text style information corresponding to the first rendered text content and text style information corresponding to second rendered text content, stacking the first tendered text content and the second rendered text content on a position corresponding to an image layer of the original image, and obtaining the to-be-processed image.

18. An image text sharing apparatus, having a display screen, and the image text sharing apparatus comprising:
a display component, configured to display a text recognition content in a to-be-processed image displayed in a first display interface, a text style of the text recognition content is the same as a text style of a text content of an original image;
an extraction component, configured to select a target text content in response to a data selection instruction for the text recognition content, the target text content representing text content at a paragraph-level or a line-level; and
a sharing component, configured to, share the target text content to a second display interface in response to a movement instruction for the target text content.

19. An image text sharing device, comprising a processor and a storage medium storing executable instructions for the processor, the storage medium depending on the processor to perform operations through a communication bus, wherein the instructions, when executed by the processor, perform the image text sharing method as claimed in any one of claims 1-17.

20. A computer-readable storage medium storing executable instructions, wherein when the executable instructions are executed by one or more processors, the one or more processors perform the image text sharing method as claimed in any one of claims 1-17.
